(19) Europäisches Patentamt
European Patent Office
Office européen des brevets

(11) **EP 4 657 632 A1**

(12) **EUROPEAN PATENT APPLICATION**
published in accordance with Art. 153(4) EPC

(43) Date of publication:
**03.12.2025 Bulletin 2025/49**

(21) Application number: **24883722.1**

(22) Date of filing: **23.01.2024**

(51) International Patent Classification (IPC):
*H01M 50/244* (2021.01)    *H01M 50/209* (2021.01)
*H01M 50/593* (2021.01)    *H01M 10/613* (2014.01)
*H01M 10/6556* (2014.01)

(52) Cooperative Patent Classification (CPC):
**H01M 10/613; H01M 10/625; H01M 10/6556;
H01M 10/6566; H01M 10/6568; H01M 50/209;
H01M 50/244; H01M 50/249; H01M 50/584;
H01M 50/593; Y02E 60/10**

(86) International application number:
**PCT/CN2024/073690**

(87) International publication number:
**WO 2025/091705 (08.05.2025 Gazette 2025/19)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **30.10.2023 CN 202311419402**

(71) Applicant: **Contemporary Amperex Technology
Co., Limited
Ningde, Fujian 352100 (CN)**

(72) Inventors:
• **WU, Kai**
  **Ningde, Fujian 352100 (CN)**
• **KE, Jianhuang**
  **Ningde, Fujian 352100 (CN)**
• **LI, Yao**
  **Ningde, Fujian 352100 (CN)**

(74) Representative: **Kraus & Lederer PartGmbB
Thomas-Wimmer-Ring 15
80539 München (DE)**

(54) **BATTERY AND ELECTRIC DEVICE**

(57)    The present application provides a battery and an electrical apparatus and relates to the technical field of batteries. The battery includes: a box having a cavity; a battery cell group accommodated in the cavity, the battery cell group including a plurality of arranged battery cells; a support plate mounted in the cavity, the battery cell group being mounted on the support plate so that the support plate supports the plurality of battery cells, and the support plate is insulated from the box.

**FIG. 2**

**Description**

**CROSS-REFERENCE TO RELATED APPLICATION**

The present application is filed based on and claims priority to Chinese patent application No. 202311419402.0 filed on October 30, 2023, which is incorporated herein by reference in its entirety.

**TECHNICAL FIELD**

The present application relates to the technical field of batteries, and more particularly, to a battery and an electrical apparatus.

**BACKGROUND**

Generally, in a battery, the box and the support plate for the battery cell group are designed to be at the same potential. When a battery cell experiences runaway, the insulation design between the battery cell and the support plate is damaged, resulting in the support plate, box and battery cell being at the same potential. The high-temperature fume also causes damage to the insulation design of the high-voltage components of the remaining battery cells, causing ignition between them and the box, resulting in double-point insulation failure and posing a safety hazard.

**SUMMARY**

The present application provides a battery and an electrical apparatus to solve the problem that thermal runaway of a battery cell in the battery can easily lead to a double-point insulation failure scenario in the battery, posing a safety hazard.

In a first aspect, an embodiment of the present application provides a battery, including:

a box having a cavity;
a battery cell group accommodated in the cavity and including a plurality of arranged battery cells; and
a support plate mounted in the cavity, the battery cell group being mounted on the support plate so that the support plate supports the plurality of battery cells, and the support plate being insulated from the box.

In the above technical solution, the probability of double-point insulation failure during thermal runaway of the battery cell can be reduced, thereby improving the safety of the battery.

In some embodiments, the insulation resistance between the support plate and the box is R1, satisfying: $R1 \geq 1M\Omega$.

In the above technical solution, the insulation requirements between the battery cell and the box are satisfied, the insulation effect is better, the breakdown probability is reduced, and the safety of the battery is guaranteed.

In some embodiments, the support plate includes a plastic member.

In the above technical solution, through the provision that the support plate is made of plastic, the insulation effect is better, the production cost is low, the installation is simple, and it is easy to expand the production scale.

In some embodiments, the support plate is connected to the box.

In the above technical solution, by connecting the support plate to the box, the overall structural strength of the battery is improved and the stability in use is improved.

In some embodiments, the support plate includes a first part and a second part connected to each other, the battery cell group is mounted on the first part, the second part is connected with the box, the first part is a metal member, and the second part is a plastic member.

In the above technical solution, through the provision that the support plate includes a first part and a second part, the first part can perform heat exchange with the battery cell group to improve the stability of the battery cell group, and the second part is a plastic member that can provide effective insulation.

In some embodiments, one of the first part and the second part is provided with a protruding portion, and the other one is provided with a groove, and the protruding portion is inserted in the groove to connect the first part with the second part.

In the above technical solution, through the provision that a protruding portion and a groove are provided to connect the first part with the second part, the connection strength between the first part and the second part is improved, and the overall structural strength is improved.

In some embodiments, the first part includes a main plate body and the protruding portion protruding from an outer peripheral surface of the main plate body toward the second part, the battery cell group is mounted on the main plate body, the thickness of the protruding portion is smaller than the thickness of the main plate body, the second part is provided around the main plate body, and the second part has the groove on a side facing the first part.

In the above technical solution, the provision of the protruding portion and the groove can improve the connection strength between the first part and the second part, improve the overall structural strength of the support plate, and improve the stability in use of the battery.

In some embodiments, the support plate is provided with a mounting hole, and the mounting hole is configured to allow a fastener to pass through to connect the support plate and the box;

the mounting hole runs through the second part along the thickness direction of the support plate;

or,

the mounting hole runs through the protruding portion and the second part along the thickness direction of the support plate.

In the above technical solution, the connection strength between the support plate and the box is higher and the stability is better.

In some embodiments, the support plate is a metal member, the support plate is spaced apart from the box, a connection plate is provided between the side of the support plate facing away from the battery cell group and the box, and the connection plate is an insulating member and is connected with the support plate and the box respectively.

In the above technical solution, through the provision of a connection plate, the production and processing difficulty is low, the assembly is easy, the production cost is reduced, and the probability of double-point insulation failure of the battery is reduced, thereby improving the safety performance.

In some embodiments, a plurality of support plates are provided, the plurality of support plates are spaced apart from each other, and each of the support plates supports at least one battery cell group.

In the above technical solution, by providing a plurality of support plates, the probability of short circuit and high-voltage breakdown of the battery is reduced, and the safety performance of the battery is improved.

In some embodiments, a plurality of battery cell groups are provided, and the plurality of battery cell groups are provided in one-to-one correspondence with the plurality of support plates.

In the above technical solution, the arrangement and assembly of the battery cell groups and the support plates are facilitated, and the arrangement density of the plurality of battery cells on the support plate is increased, which is convenient for management.

In some embodiments, at least one of the connection plates has a protrusion, and the protrusion extends into a gap between two adjacent support plates.

In the above technical solution, by providing a protrusion on the connection plate, the insulation design between various support plates is made more stable, thereby improving the safety performance of the battery.

In some embodiments, the insulation resistance between two adjacent support plates is R2, satisfying: $R2 \geq 1K\Omega$.

In the above technical solution, the insulation resistance between two adjacent support plates is determined by defining the minimum value of the insulation resistance R2 between two adjacent support plates to ensure the insulation effect between various support plates and improve the safety of the battery.

In some embodiments, the potential difference between the cases of two adjacent battery cells in the same battery cell group mounted on the same support plate is $U_i$, satisfying: $U_i \leq 50V$.

In the above technical solution, by setting the maximum value of the potential difference $U_i$ between the cases of two battery cells is set, the probability of ignition is reduced and the safety of the battery is improved.

In some embodiments, $U_i \leq 20V$.

In the above technical solution, by further defining the range of the potential difference $U_i$ between the cases of two adjacent battery cells in the same battery cell group on the same support plate, the risk of ignition is further reduced.

In some embodiments, the maximum potential difference between the cases of two adjacent battery cells in the same battery cell group mounted on the same support plate is $U_{max}$, and the volumetric energy density of the battery cell is E, satisfying:

$$1.05 * 10^3 Wh * V / L \leq E * U_{max} \leq 4 * 10^4 Wh * V / L.$$

In the above technical solution, by defining the maximum and minimum values of $E*U_{max}$, the probability of thermal runaway occurring when two battery cells are in thermal runaway is reduced, while ensuring high cost-effectiveness of the battery.

In some embodiments, $300Wh/L \leq E \leq 800Wh/L$, and $3.5V \leq U_{max} \leq 50V$.

In the above technical solution, by defining the maximum value $U_{max}$ of the potential difference between the cases of two adjacent battery cells and the range of the volumetric energy density E of the battery cells, the battery cells can have a high cost-effectiveness and ignition is unlikely to be caused.

In some embodiments, $1.05 * 10^3 \, Wh * V / L \leq E * U_{max} \leq 1.6 * 10^4 Wh * V / L,$ and $3.5V \leq U_{max} \leq 20V.$

In the above technical solution, the ranges of $E*U_{max}$ and $U_{max}$ are further defined to further improve the safety of the battery.

In some embodiments, a flow channel is provided in the support plate for flow of the heat exchange medium, and the heat exchange medium is used to regulate the temperature of the battery cell. The flow channels of the plurality of support plates are communicated through a connection portion, and the connection portion is an insulating member.

In the above technical solution, the flow channels of the various support plates are communicated while ensuring the insulation design, which facilitates the thermal management design of the battery cells.

In some embodiments, the maximum potential difference between the cases of the two adjacent battery cells belonging respectively to two adjacent battery cell groups mounted on two adjacent support plates in the two adjacent battery cell groups is U1, and the resistance of the heat exchange medium in the connection portion is R3, satisfying: $0.05V/K\Omega \leq U1/R3 \leq 400V/K\Omega$, where $R3 = \rho L/S$, $\rho$ is the conductivity of the heat exchange medium, L is the length of the heat exchange medium flowing in the connection portion, and S is the flow cross-sectional area of the connection portion.

In the above technical solution, by defining the range of U1/R3, safety performance in the case where the connection portion is provided is ensured and the production costs are under control.

In some embodiments, $50V \leq U1 \leq 400V$ and $1K\Omega \leq R3 \leq 1000K\Omega.$

In the above technical solution, by defining the value ranges of U1 and R3, the safety performance of the battery is improved and the production and design costs of the battery are under control.

In some embodiments, $0.05V/K\Omega \leq U1/R3 \leq 200V/K\Omega.$

In the above technical solution, by defining the value range of U1/R3, the battery has better safety.

In some embodiments, the side wall of the battery cell provided with a pressure relief mechanism is connected with the support plate, and the support plate has an avoidance structure provided opposite to the pressure relief mechanism.

In the above technical solution, by providing an avoidance structure on the support plate to facilitate smooth opening of the pressure relief mechanism, the safety performance of the battery is improved.

In some embodiments, the avoidance structures are in one-to-one correspondence with the pressure relief mechanisms;

or, each of the avoidance structures corresponds to a plurality of pressure relief mechanisms.

In some embodiments, the avoidance structure includes a through hole provided in the support plate.

In the above technical solution, by providing the through hole to effectively avoid the action of the pressure relief mechanism, safety is ensured.

In some embodiments, the avoidance structure includes an avoidance groove provided in the support plate, and an opening of the avoidance groove faces the pressure relief mechanism.

In the above technical solution, by providing the avoidance groove to effectively avoid the action of the pressure relief mechanism, safety is ensured while easy processing is allowed.

In some embodiments, the depth of the avoidance groove is H, satisfying: $2mm \leq H \leq 10mm$; and/or, the thickness of the bottom wall of the avoidance groove is h, satisfying: $0.1mm \leq h \leq 2mm.$

In the above technical solution, the design parameters of the avoidance groove are defined to ensure normal operation of the pressure relief mechanism and ensure the safety of the battery.

In some embodiments, a plurality of support plates are provided, the plurality of support plates are spaced apart from each other, and the avoidance structure includes an avoidance gap between two adjacent support plates.

In the above technical solution, the avoidance gap is provided to avoid the pressure relief mechanism, which allows simple production and processing and is beneficial for reducing the production costs.

In a second aspect, an embodiment of the present application provides an electrical apparatus, including: a battery of any of the aforementioned embodiments, the battery being configured to supply electric energy.

In the above technical solution, by using the battery as described in the aforementioned embodiments, there is low probability of double-point insulation failure during thermal runaway of the battery cell in the battery, thereby improving the safety of the battery and further improving the safety and stability in use of the electrical apparatus.

## BRIEF DESCRIPTION OF DRAWINGS

To more clearly describe the technical solutions of the embodiments of the present application, the drawings to be used in the embodiments will be briefly introduced below, and it should be understood that the following drawings only show some embodiments of the present application, and therefore should not be considered as limiting the scope of the present application. For those of ordinary skills in the art, other relevant drawings may also be obtained based on these drawings without creative efforts.

FIG. 1 is a schematic structural view of a vehicle according to some embodiments of the present application;

FIG. 2 is a first exploded structural view of a battery according to some embodiments of the present application;

FIG. 3 is a first schematic sectional structural view of a battery according to some embodiments of the present application;

FIG. 4 is a second exploded structural view of a battery according to some embodiments of the present application;

FIG. 5 is a second schematic sectional structural view of a battery according to some embodiments of the present application;

FIG. 6 is an enlarged view at A in FIG. 5;

FIG. 7 is a third schematic sectional structural view of a battery according to some embodiments of the present application;

FIG. 8 is an enlarged view at B in FIG. 7;

FIG. 9 is a third exploded structural view of a battery according to some embodiments of the present application;

FIG. 10 is a fourth schematic sectional structural view of a battery according to some embodiments of the present application;

FIG. 11 is a fourth exploded structural view of a battery according to some embodiments of the present application;

FIG. 12 is a fifth schematic sectional structural view of a battery according to some embodiments of the present application;

FIG. 13 is an enlarged view at C in FIG. 12;

FIG. 14 is a sixth schematic sectional structural view of a battery according to some embodiments of the present application;

FIG. 15 is an enlarged view at D in FIG. 14;

FIG. 16 is a fifth exploded structural view of a battery according to some embodiments of the present application;

FIG. 17 is a seventh schematic sectional structural view of a battery according to some embodiments of the present application;

FIG. 18 is a sixth exploded structural view of a battery according to some embodiments of the present application;

FIG. 19 is a first partial exploded structural view of a battery according to some embodiments of the present application;

FIG. 20 is a second partial exploded structural view of a battery according to some embodiments of the present application;

FIG. 21 is a third partial exploded structural view of a battery according to some embodiments of the present application;

FIG. 22 is a first partial schematic sectional structural view of a battery according to some embodiments of the present application;

FIG. 23 is an enlarged view at E in FIG. 22;

FIG. 24 is a fourth partial exploded structural view of a battery according to some embodiments of the present application; and

FIG. 25 is a fifth partial exploded structural view of a battery according to some embodiments of the present application.

Reference numerals:

vehicle 1, battery 10, motor 20, controller 30;

battery cell group 11, battery cell 111, pressure relief mechanism 1111;

box 12, bottom plate 121, top cover 122, frame 123, cavity 124;

support plate 13, first part 131, main plate body 1311, protruding portion 1312, second part 132, mounting hole 1321, flow channel 133, avoidance structure 134, through hole 1341, avoidance groove 1342, avoidance gap 1343;

connection plate 14, protrusion 141;

connection portion 15.

## DETAILED DESCRIPTION

In order to make the objects, technical solutions and advantages of embodiments of the present application clearer, the technical solutions in the embodiments of the present application will be clearly described below with reference to the drawings for the embodiments of the present application. Apparently, the described embodiments are some of, rather than all of, the embodiments of the present application. All other embodiments obtained by those of ordinary skill in the art based on the embodiments in the present application without any creative effort shall fall within the scope of protection of the present application.

Unless otherwise defined, all technical and scientific terms used in the present application have the same meanings as those commonly understood by those skilled in the art to which the present application belongs. The terms used in the specification of the present application are merely for the purpose of describing specific embodiments, but are not intended to limit the present application. The terms "include" and "have" and any variations thereof in the specification and the claims of the present application as well as the above description of the drawings are intended to cover non-exclusive inclusions. The terms "first," "second," etc. in the specification and the claims of the present application as well as the above drawings are used to distinguish different objects, rather than to describe a specific order or primary-secondary relationship.

Reference in the present application to an "embodiment" means that a particular feature, structure, or characteristic described in connection with the embodiment can be included in at least one embodiment of the present application. The appearance of this phrase in various places in the specification does not necessarily refer to the same embodiment, nor is it a separate or alternative embodiment that is mutually exclusive with other embodiments. It is understood explicitly and implicitly by those skilled in the art that the embodiments described in the present application can be combined with other embodiments.

In the description of the present application, it should be noted that the terms "mounting", "connecting", "connection" and "attachment" should be understood in a broad sense, unless otherwise explicitly specified or defined, for example, it may be a fixed connection, a detachable connection or an integrated connection; and may be a direct connection or an indirect connection through an intermediate medium, or may be a communication between the interior of two elements. For those of ordinary skill in the art, the specific meanings of the above terms in the present application can be understood according to specific situations.

In the present application, the term "and/or" is only an association relation describing associated objects, which means that there may be three relations, for example, A and/or B may represent three situations: A exists alone, both A and B exist, and B exists alone. In addition, the character "/" in the present application generally means that the associated objects before and after it are in an "or" relationship.

In the present application, the term "a plurality of" refers to more than two (including two), similarly, "a plurality of groups" refers to more than two groups (including two groups), and "a plurality of pieces" refers to more than two pieces (including two pieces).

A battery cell mentioned in the embodiments of the present application may include a lithium ion secondary battery, a lithium ion primary battery, a lithium sulfur battery, a sodium/lithium ion battery, a sodium ion battery or a magnesium ion battery and so on, which will not be limited in the embodiments of the present application. The battery cell may be in a cylindrical shape, a flat shape, a cuboid shape or another shape, which is not limited in the embodiments of the present application either. The battery cells are generally classified into three types depending on the way of encapsulation: cylindrical battery cells, square battery cells and pouch battery cells, which are also not limited in the embodiments of the present application.

The battery mentioned in the embodiments of the present application refers to a single physical module comprising one or more battery cells to provide higher voltage and capacity. For example, the battery mentioned in the present application may include a battery module, a battery pack, or the like. The battery generally includes a box for packaging one or more battery cell or a plurality of battery modules. The box can prevent liquid or other foreign matters from affecting charging or discharging of the battery cells.

The battery cell includes a shell, an electrode assembly, and an electrolyte, where the shell is used to accommodate the electrode assembly and the electrolyte. The electrode assembly consists of a positive electrode plate, a negative electrode plate, and a separator film. The battery cell operates mainly relying on movement of metal ions between the positive electrode plate and the negative electrode plate. The positive electrode plate includes a positive electrode current collector and a positive electrode active material layer, a surface of the positive electrode current collector is coated with the positive electrode active material layer, the positive electrode current collector not coated with the positive electrode active material layer protrudes from the positive electrode current collector already coated with the positive electrode active material layer, and the positive electrode current collector not coated with the positive electrode active material layer is used as a positive tab. Taking a lithium-ion battery as an example, the material of the positive electrode current collector may be aluminum, and the positive electrode active material may be lithium cobalt oxide, lithium iron phosphate, ternary lithium, lithium manganate, etc. The negative electrode plate includes a negative electrode current collector and a negative electrode active material layer, a surface of the negative electrode current collector is coated with the negative electrode active material layer, the negative electrode current collector not coated with the negative electrode active material layer protrudes from the negative electrode current collector already coated with the negative electrode active material layer, and the negative electrode current collector not coated with the negative electrode active material layer is used as a negative tab. The material of the negative electrode current collector may be copper, and the negative electrode active material may be carbon, silicon, etc. In order to ensure that no fusing occurs when a large current passes, there are a plurality of positive tabs which are stacked together, and there are a plurality of negative tabs which are stacked together.

The separator may be of a material such as polypropylene (PP) or polyethylene (PE). In addition, the electrode assembly may have a winded structure or a stacked structure, but the embodiments of the present application are not limited thereto.

In recent years, new energy vehicles have made a leap forward in development. In the field of electric vehicles, power batteries, as power sources of electric vehicles, play an irreplaceable and important role. The battery consists of a box and a plurality of battery cells accommodated within the box. The batteries, as core components of the new energy vehicles, have high requirements in terms of both security and cyclic service life.

In a battery in general, the box and the support plate for the battery cell group are designed to be at the same potential. When a battery cell experiences runaway, the insulation design between the battery cell and the support plate is damaged, resulting in the support plate, box and battery cell being at the same potential. The high-temperature fume also causes damage to the insulation design of the high-voltage components of the remaining battery cells, causing ignition between them and the box, resulting in double-point insulation failure and posing a safety hazard.

Based on the above considerations, in order to solve the problem that thermal runaway of a battery cell in a battery may easily lead to a double-point insulation failure scenario in the battery, posing a safety hazard, the present application designs a battery, including a box, a support plate and a battery cell group, the box having a cavity, the battery cell group being accommodated in the cavity, the battery cell group including a plurality of arranged battery cells, the support plate being mounted in the cavity, the battery cell group being mounted on the support plate so that the support plate supports the plurality of battery cells, and the support plate is insulated from the box.

In a battery of this structure, the support plate is insulated from the box. Even if the insulation between the battery cell and the support plate fails, the insulation between the support plate and the box makes it difficult for the battery cell to be in communication with the box, thereby reducing the possibility of double-point insulation failure and improving the safety performance of the battery.

An embodiment of the present application provides an electrical apparatus with a battery used as a power source. The electrical apparatus may be, but is not limited to, a mobile phone, a tablet, a laptop, an electric toy, an electric tool, a storage battery car, an electric vehicle, a ship, a spacecraft, etc. The electric toy may include fixed or mobile electric toys, such as a game machine, an electric vehicle toy, an electric ship toy, and an electric airplane toy, etc. The spacecraft may include an airplane, a rocket, a space shuttle and a spaceship, etc.

For the convenience of description in the following embodiments, an electrical apparatus being a vehicle 1 according to an embodiment of the present application is taken as an example for the description.

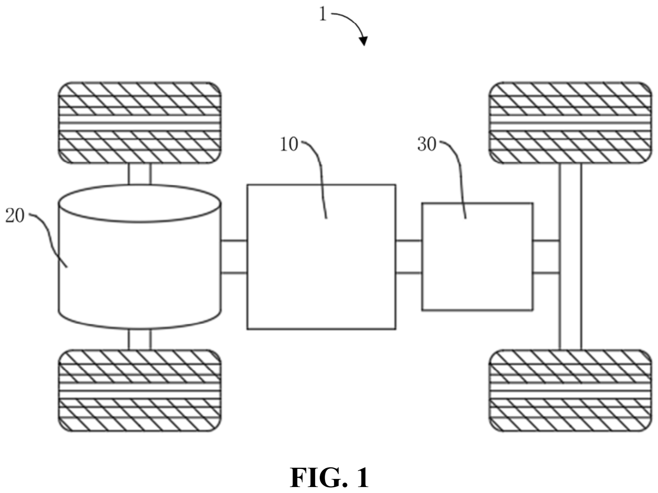

FIG. 1 is a schematic structural view of a vehicle 1 according to an embodiment of the present application. The vehicle 1 may be a fuel vehicle, a gas vehicle or a new energy vehicle, and the new energy vehicle may be an all-electric vehicle, a hybrid electric vehicle, an extended range electric vehicle, etc. A motor 20, a controller 30 and a battery 10 may be provided inside the vehicle 1, and the controller 30 is configured to control the battery 10 to supply power to the motor 20. For example, the battery 10 may be provided at the bottom or the head or the tail of the vehicle 1. The battery 10 may be configured to supply power to the vehicle 1, for example, the battery 10 may be used as an operating power source of the vehicle 1, which is used for a circuit system of the vehicle 1, for example, for operation power requirements of the vehicle 1 during starting, navigation and running. In another embodiment of the present application, the battery 10 can be used not only as an operation power supply of the vehicle 1, but also as a driving power supply of the vehicle 1, replacing or partially replacing fuel or natural gas to supply driving power to the vehicle 1.

In order to meet different power requirements, the battery 10 may include a plurality of battery cells 111, where the plurality of battery cells 111 may be in series connection, parallel connection or parallel-series connection. The parallel-series connection refers to a combination of series connection and parallel connection.

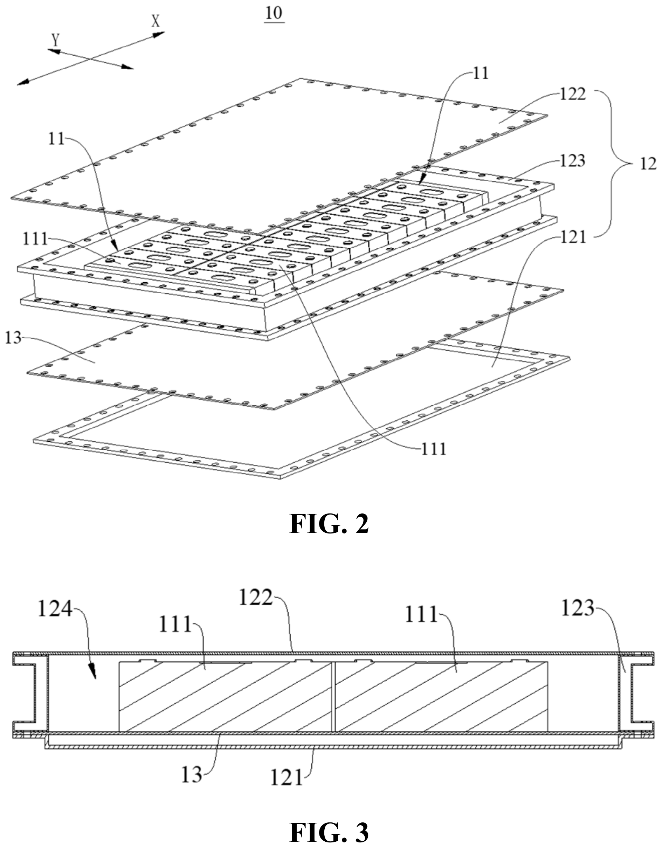

As shown in FIG. 2, which is an exploded structural view of a battery 10 according to an embodiments of the present application, the battery 10 includes a box 12 and a plurality of battery cells 111. The battery cells 111 are accommodated in the box 12. The box 12 is configured to provide an assembling space for the battery cells 111, and the box 12 may be of a variety of structures. In some embodiments, the box 12 may include a bottom plate 121, a top cover 122 and a frame 123. The frame 123 may be a hollow structure with both ends open. The bottom plate 121 and the top cover 122 are respectively covered on the open sides of the frame 123. The bottom plate 121, the top cover 122 and the frame 123 jointly define a cavity 124, which is an assembling space for accommodating the battery cells 111. Of course, the box 12 formed by the bottom plate 121, the top cover 122 and the frame 123 may be of various shapes, such as a cylinder and a cuboid.

In the battery 10, the plurality of battery cells 111 may be connected in series or in parallel or in parallel-series connection. The parallel-series connection means that some of the plurality of battery cells 111 are connected in series and some are connected in parallel. The plurality of battery cells 111 may be directly connected in series, in parallel, or in parallel-series connection, and then the entirety formed by the plurality of battery cells 111 is accommodated in the box 12. Of course, the battery 10 may alternatively be formed by connecting the plurality of battery cells 111 in series, in parallel, or in parallel-series connection to form battery cell groups 11, and then connecting the plurality of battery cell groups 11 in series, in parallel, or in parallel-series connection to form an entirety, which is accommodated in the box 12. The battery 10 may further include other structures, for example, the battery 10 may further include a bus component for electrically connecting the plurality of battery cells 111.

Referring to FIG. 2, the battery 10 includes a plurality of battery cell groups 11, each of which includes a plurality of battery cells 111. The battery cells 111 of each battery cell group 11 are arranged along a first direction X, and the plurality of battery cell groups 11 are arranged along a second direction Y. The first direction X and the second direction Y are respectively the length direction of the box 12 and the width direction of the box 12, and the first direction X and the second direction Y are perpendicular to each other.

Each battery cell 111 may be a secondary battery or a primary battery; and may also be a lithium-sulfur battery, a sodium-ion battery, or a magnesium-ion battery, but is not limited thereto. The battery cell 111 may be in a cylindrical shape, a flat shape, a cuboid shape or other shapes. By way of example, in FIG. 3, the battery cell 111 is in a cuboid shape.

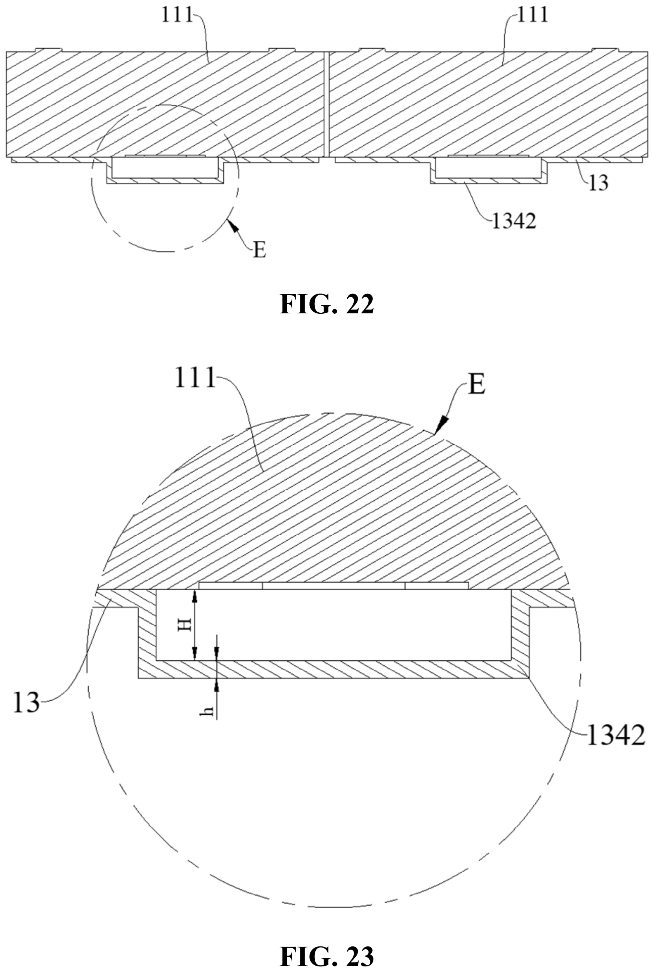

According to some embodiments of the present application, as shown in FIGS. 2 to 25, and referring to FIG. 2, an embodiment of the present application provides a battery 10. The battery 10 may include a box 12, a battery cell group 11, and a support plate 13.

The box 12 may have a cavity 124, the battery cell group 11 may be accommodated in the cavity 124, the battery cell group 11 may include a plurality of arranged battery cells 111, the support plate 13 may be mounted in the cavity 124, the battery cell group 11 may be mounted on the support plate 13 so that the support plate 13 supports the plurality of battery cells 111, and the support plate 13 may be insulated from the box 12.

The box 12 may be the box 12 of the aforementioned embodiment, which will not be described in detail here. In this implementation, the box 12 may be provided in a cuboid shape. The battery cell group 11 may be accommodated in the cavity 124. The battery cell group 11 may include a plurality of battery cells 111 to increase the capacity of the battery 10. The specific number of battery cells 111 included in a battery cell group 11 is not limited and is designed according to actual needs.

Specifically, the support plate 13 is mounted in the cavity 124, and the battery cell group 11 is mounted on the support plate 13. The battery cell group 11 can be fixedly connected to the support plate 13 by bonding, so that the battery cell group 11 is connected to the box 12 through the support plate 13. Specifically, the support plate 13 and the box 12 are relatively insulated from each other, so that the battery cell group 11 and the box 12 can be relatively insulated from each other. Even if the battery cell 111 in the battery cell group 11 experiences thermal runaway, the probability of double-point insulation failure can be reduced as the battery cells 111 are insulated from the box 12, thereby improving safety.

In actual implementation, the support plate 13 is first mounted in the box 12 and the support plate 13 is insulated from the box 12, and then the battery cell group 11 is mounted on the support plate 13, and a plurality of battery cells 111 are fixedly mounted on the support plate 13 by bonding. In the event that a battery cell 111 experiences thermal runaway, only single-point insulation failure will occur even if the fume generated by the battery cell 111 causes the insulation design of the high-voltage components of the remaining battery cells 111 to fail, as the battery cell 111 is relatively insulated from the box 12, thereby reducing the probability of double-point insulation failure and improving the safety performance of the battery 10.

With the battery 10 provided according to the embodiment of the present application, the probability of double-point insulation failure during thermal runaway of the battery cell 111 can be reduced, thereby improving the safety of the battery 10.

According to some embodiments of the present application, the insulation resistance between the support plate 13 and the box 12 is R1, which can satisfy: $R1 \geq 1M\Omega$. In some embodiments, R1 may be $1M\Omega$, $2M\Omega$, $3M\Omega$, $5M\Omega$, $10M\Omega$, or other resistance values greater than or equal to $1M\Omega$, which is not limited herein.

In this implementation, by defining the minimum value of the insulation resistance R1 between the support plate 13 and the box 12, the insulation requirements between the support plate 13 and the box 12 are met, and consequently the insulation requirements between the battery cell 111 and the box 12 are met, so that the insulation effect is better, the breakdown probability is reduced, and the safety of the battery 10 is ensured.

According to some embodiments of the present application, as shown in FIGS. 2 and 3, the support plate 13 may include a plastic member.

In this implementation, the support plate 13 may include a plastic member, and the support plate 13 is entirely made of the plastic member. The material of the plastic member may be polyolefin or polypropylene, etc., which is not specifically limited herein.

With the support plate 13 provided according to the embodiment of the present application, by providing the support plate 13 to be made of plastic material, the insulation effect is better, the production cost is low, the mounting is simple, and it is easy to expand the production scale.

According to some embodiments of the present application, as shown in FIGS. 2 to 8, the support plate 13 may connected to the box 12.

In this implementation, the support plate 13 may be directly connected to the box 12, so that the connection strength between the support plate 13 and the box 12 is high, and the structure is relatively stable, thereby improving the overall structural strength.

In actual implementation, the support plate 13 may be provided in a flat plate shape. The support plate 13 may be mounted between the bottom plate 121 and the frame 123, and fixed connection is achieved by fasteners. The installation is simple and the insulation effect is good.

According to the embodiments of the present application, the support plate 13 is connected to the box 12 to improve the overall structural strength of the battery 10 and improve the stability in use.

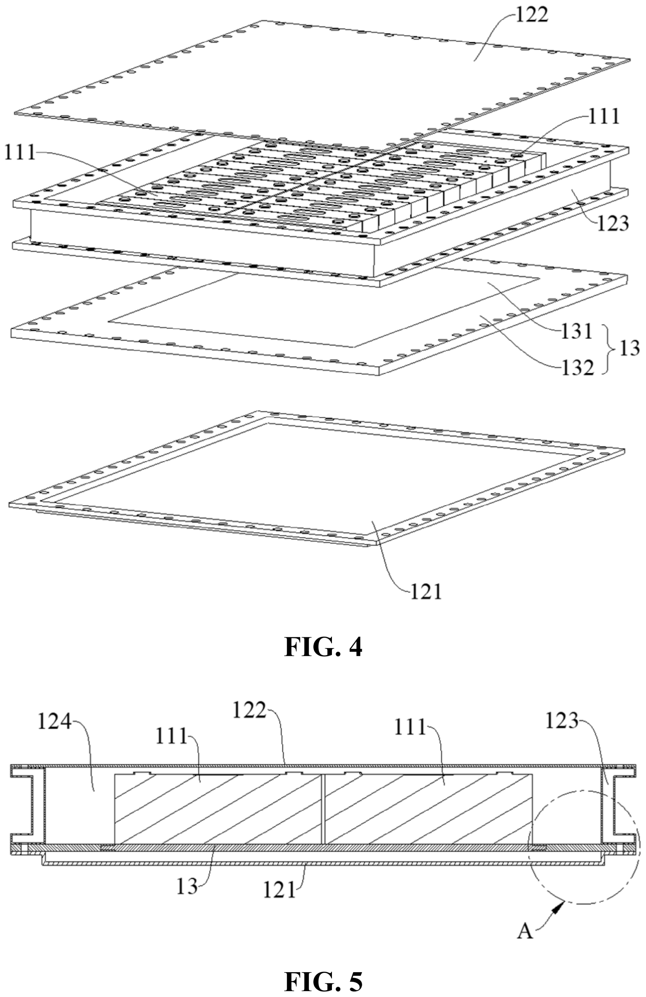

According to some embodiments of the present application, as shown in FIGS. 4 to 8, the support plate 13 may include a first part 131 and a second part 132 connected to each other, the battery cell group 11 may be mounted on the first part 131, the second part 132 may be connected to the box 12, and the first part 131 may be a metal member, and the second part 132 may be a plastic member.

In this implementation, the support plate 13 may include a first part 131 and a second part 132, where the first part 131 may be a metal member, and the second part 132 may be a plastic member, and the first part 131 and the second part 132 are connected to form the support plate 13. The metal member has good thermal conductivity and can be provided as a water-cooled plate. A flow channel can be provided in the metal member, and a heat exchange medium flows in the flow channel to regulate the temperature of the battery cells 111 and improve the service performance and stability in use of the battery 10. The plastic member has good insulation and high structural strength and can serve as a good insulation component.

The battery cell group 11 is mounted on the first part 131, and heat exchange is performed on the battery cell group 11 through the metal member to regulate the temperature of the battery cells 111 and improve the operation performance of the battery cells 111. The plastic member is connected to the metal member. On the one hand, the plastic member supports the metal member and the battery cell group 11, and on the other hand, the plastic member is mounted on the box 12 to insulate the metal member, the battery cell group 11 and the box 12, thereby ensuring insulation.

In actual implementation, the second part 132 may be provided around the periphery of the first part 131. The second part 132 is fixedly mounted between the frame 123 and the bottom plate 121 by fasteners, so that the second part 132 can provide some support for the first part 131, while ensuring the insulation between the first part 131 and the box 12.

With the support plate 13 provided according to the embodiment of the present application, the support plate 13 is provided to include a first part 131 and a second part 132, the first part 131 can perform heat exchange with the battery cell group 11 to improve the stability of the battery cell group 11, and the second part 132 is a plastic member that can provide effective insulation.

According to some embodiments of the present application, as shown in FIGS. 4 to 8, one of the first part 131 and the second part 132 may be provided with a protruding portion 1312, and the other may be provided with a groove, and the protruding portion 1312 may be inserted in the groove to connect the first part 131 with the second part 132.

In this implementation, the protruding portion 1312 may be provided on the first part 131, and the groove may be provided on the second part 132; or alternatively the groove may be provided on the first part 131, and the protruding portion 1312 may be provided on the second part 132. The protruding portion 1312 is inserted in the groove to achieve fixed connection between the first part 131 and the second part 132, allowing a simple structure and high strength.

Specifically, there may be a plurality of protruding portions 1312, and there may be a plurality of grooves in one-to-one correspondence with the protruding portions 1312. By providing a plurality of protruding portions 1312 and a plurality of grooves, the strength is improved and the force is more evenly distributed.

According to an embodiment of the present application, through the provision that a protruding portion 1312 and a groove are provided to connect the first part 131 with the second part 132, the connection strength between the first part 131 and the second part 132 is improved, and the overall structural strength is improved.

According to some embodiments of the present application, as shown in FIGS. 4 to 8, the first part 131 may include a main plate body 1311 and a protruding portion 1312 protruding from the outer peripheral surface of the main plate body 1311 toward the second part 132, the battery cell group 11 may be mounted on the main plate body 1311, the thickness of the protruding portion 1312 may be smaller than the thickness of the main plate body 1311, the second part 132 may be provided around the main plate body 1311, and the second part 132 has a groove on the side facing the first part 131.

In this implementation, the first part 131 may include a main plate body 1311 and a protruding portion 1312. The main plate body 1311 is used for mounting the battery cell group 11. The battery cell group 11 may be fixedly connected to the main plate body 1311 by bonding.

The protruding portion 1312 may protrude from the outer peripheral surface of the main plate body 1311 toward the second part 132, and the thickness of the protruding portion 1312 may be smaller than the thickness of the main plate body 1311, so that a step is formed between the protruding portion 1312 and the main plate body 1311. The second part 132 may be provided around the main plate body 1311, and the second part 132 may have a groove on the side facing the first part 131. The protruding portion 1312 and the groove can be mated through insertion to achieve fixed connection, so that the connection strength between the first part 131 and the second part 132 is high, the overall structural strength of the support plate 13 is improved, and the stability in use of the battery 10 is improved.

In an example, the protruding portion 1312 can be provided in a ring shape on the outer side wall of the main plate body 1311, and the groove is provided opposite thereto in a ring shape on the inner side face of the second part 132, providing a large connection area and allowing simple processing.

In another example, a plurality of protruding portions 1312 may be provided, and the plurality of protruding portions 1312 are spaced apart and distributed along the circumferential direction of the main plate body 1311, and a plurality of grooves are provided in one-to-one correspondence with the protruding portions 1312, providing high structural strength and good deformation resistance.

Specifically, the protruding portion 1312 may be centered along the thickness direction of the main plate body 1311, and the groove of the second part 132 may be centered along the thickness direction of the second part 132, so that after the protruding portion 1312 is inserted in the groove, limit stops are formed on both sides in the thickness direction to ensure the connection strength between the first part 131 and the second part 132.

In actual implementation, a flow channel may be provided in the main plate body 1311, and a heat exchange medium flows in the flow channel to form a water-cooled plate structure to regulate the temperature of the battery cell 111. Specifically, as the second part 132 is a plastic member, the second part 132 and the first part 131 may be injection molded, allowing simple production and processing. Specifically, the surface of the second part 132 in the thickness direction may be flush with the surface of the main plate body 1311 in the thickness direction, facilitating production, transportation and assembly.

Through the provision of the protruding portion 1312 and the groove according to the embodiment of the present application, the connection strength between the first part 131 and the second part 132 is improved, the overall structural strength of the support plate 13 is improved, and the stability in use of the battery 10 is improved.

According to some embodiments of the present application, as shown in FIGS. 5 to 8, the support plate 13 may be provided with a mounting hole 1321, and the mounting hole 1321 may be used to allow a fastener to pass through to connect the support plate 13 and the box 12.

The box 12 may include a frame 123 and a bottom plate 121. The frame 123 and the bottom plate 121 may be fixedly connected by fasteners to achieve assembly of the box 12. The support plate 13 may be provided with a mounting hole 1321. When the support plate 13 is connected to the box 12, the portion of the support plate 13 provided with the mounting hole 1321 can be clamped between the frame 123 and the bottom plate 121, so that the fastener passes through the frame 123, the mounting hole 1321 and the bottom plate 121 to achieve the connection between the support plate 13 and the box 12.

To facilitate assembly, the periphery of the support plate 13 is generally aligned with the edge of the box 12 to prevent the support plate 13 from interfering with the outside. The mounting hole 1321 is provided close to the edge of the support plate 13 for easy installation, where the mounting hole 1321 can be provided in at least one of the following ways.

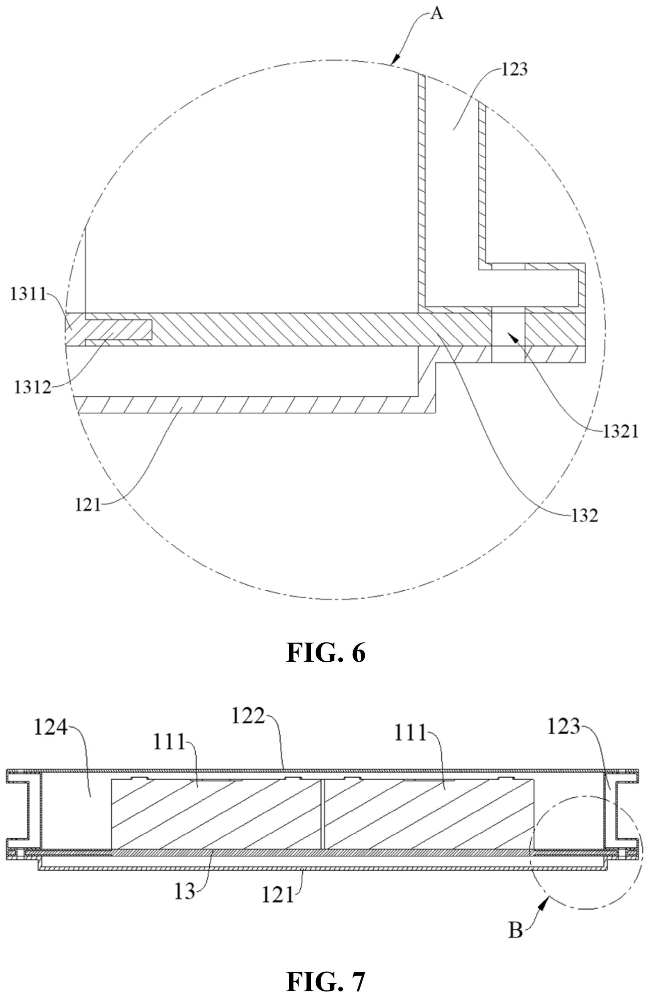

As a first example, as shown in FIGS. 5 and 6, the mounting hole 1321 may run through the second part 132 along the thickness direction of the support plate 13.

In this implementation, the mounting hole 1321 only runs through the second part 132 along the thickness direction of the support plate 13, and only the second part 132 is clamped between the frame 123 and the bottom plate 121 and is connected by fasteners, and the first part 131 and the battery cell group 11 are supported by the second part 132.

In actual implementation, when manufacturing the support plate 13, the second part 132 can be connected to the first part 131 first, and then the mounting hole 1321 can be processed in the second part 132. The production process is simple, the production efficiency is improved, and the material cost is saved.

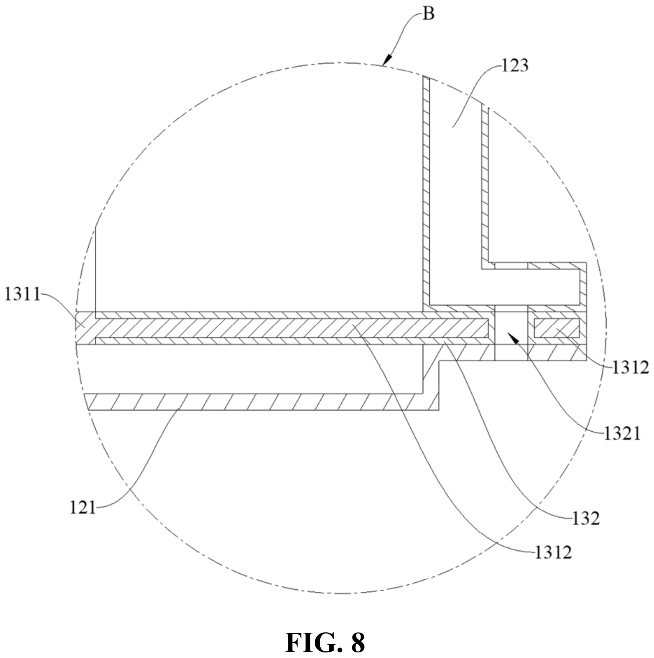

As a second example, as shown in FIGS. 7 and 8, the mounting hole 1321 runs through the protruding portion 1312 and the second part 132 along the thickness direction of the support plate 13.

In this implementation, the protruding portion 1312 extends outward from the outer side face of the main plate body 1311 to a position between the frame 123 and the bottom plate 121, so that the protruding portion 1312 has a greater width. The groove of the second part 132 has a greater depth. The mounting hole 1321 runs through the protruding portion 1312 and the second part 132 along the thickness direction of the support plate 13, so that when the support plate 13 is connected to the box 12, the protruding portion 1312 and the second part 132 are clamped together between the frame 123 and the bottom plate 121, and connected by fasteners, so that the fastening force is directly transmitted to the first part 131. As the first part 131 is a metal member, the structural strength is higher, which improves the connection strength and stability.

In actual implementation, when manufacturing the support plate 13, the main plate body 1311 and the protruding portion 1312 of the first part 131 can be manufactured first, and the mounting hole 1321 can be pre-machined on the protruding portion 1312. Then, the second part 132 is connected to the first part 131 by integral injection molding, and the second part 132 is wrapped around the protruding portion 1312. Moreover, at least part of the second part 132 covers the inner wall of the pre-machined mounting hole 1321 on the protruding portion 1312 to form the mounting hole 1321, so that the protruding portion 1312 of the first part 131 is separated and insulated from the box 12 and the fasteners, thereby ensuring insulation while allowing high structural strength and good stability.

Specifically, fasteners may be bolt-nut assemblies or rivet parts, etc., which is not limited herein.

The mounting hole 1321 according to the embodiment of the present application enables higher connection strength between the support plate 13 and the box 12 and better stability.

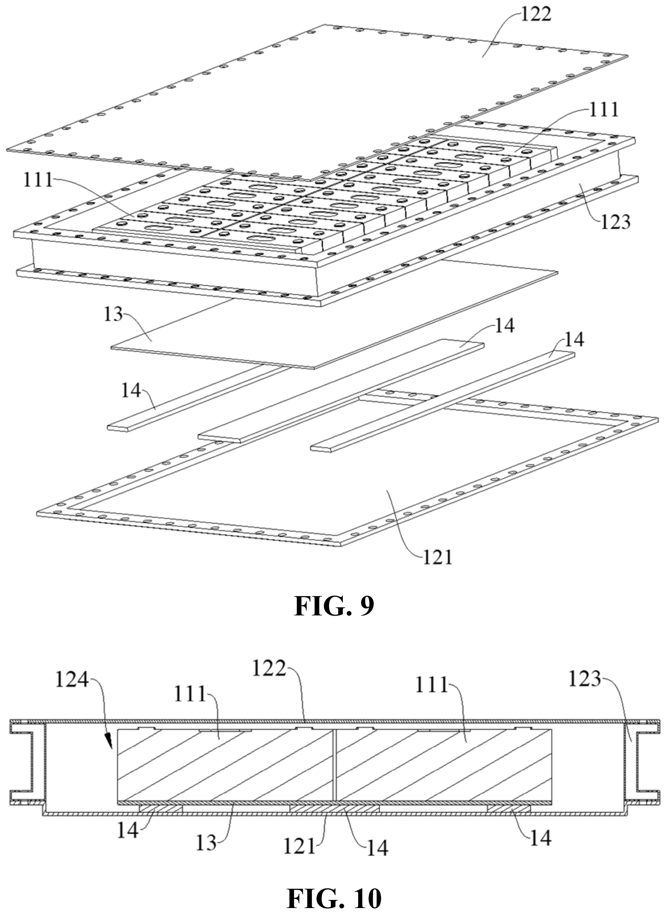

According to some embodiments of the present application, as shown in FIGS. 9 to 25, and specifically referring to FIGS. 9 and 10, the support plate 13 may be a metal member, the support plate 13 may be spaced apart from the box 12, a connection plate 14 may be provided between the side of the support plate 13 facing away from the battery cell group 11 and the box 12, and the connection plate 14 may be an insulating member and is connected to the support plate 13 and the box 12 respectively.

In this implementation, the support plate 13 may be a metal member with high structural strength and good thermal conductivity. A flow channel 133 may be provided in the support plate 13 for circulation of a heat exchange medium in the flow channel 133 to regulate the temperature of the battery cell group 11.

The support plate 13 may be spaced apart from the box 12, and a connection plate 14 may be provided between the side of the support plate 13 facing away from the battery cell group 11 and the box 12, and the two sides of the connection plate 14 are respectively connected to the support plate 13 and the box 12, so that the support plate 13 is mounted on the box 12 through the connection plate 14. The connection plate 14 may be fixedly connected to the support plate 13 by bonding, and the connection plate 14 may be fixedly connected to the box 12 by gluing, so that the support plate 13 is relatively fixed to the box 12.

The connection plate 14 may be an insulating member. By providing the connection plate 14 as an insulating member and having the support plate 13 spaced apart from the box 12, insulation is achieved between the support plate 13 and the box 12. There may be a plurality of connection plates 14, which are spaced apart from each other, thereby ensuring installation strength while reducing material costs.

According to the embodiments of the present application, through the provision of a connection plate 14, the production and processing difficulty is low, the assembly is easy, the production cost is reduced, and the probability of double-point insulation failure of the battery 10 is reduced, thereby improving the safety performance.

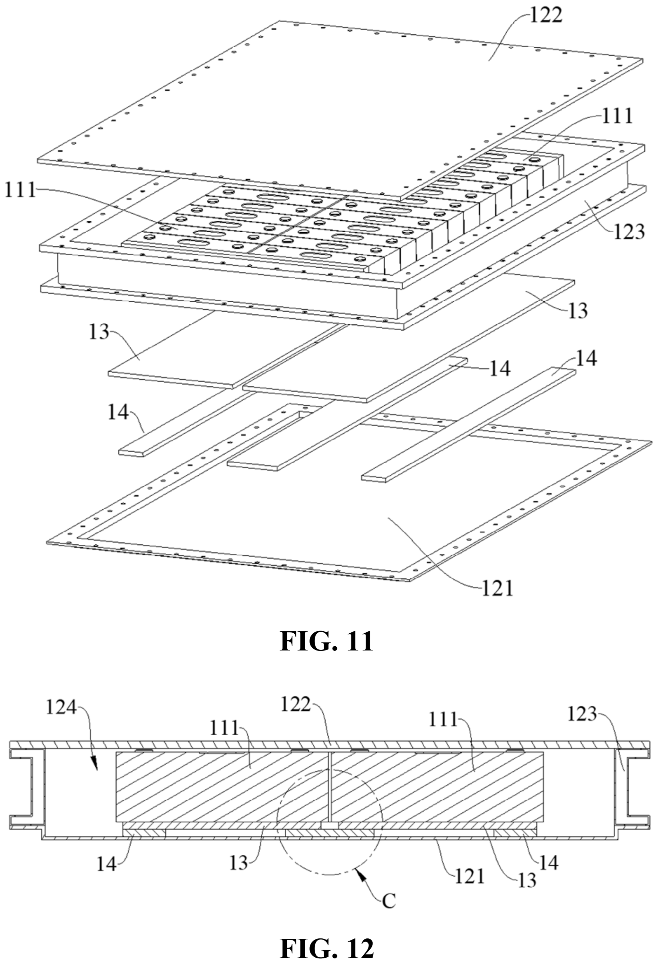

According to some embodiments of the present application, as shown in FIGS. 11 to 25, and specifically referring to FIGS. 11 to 13, a plurality of support plates 13 may be provided, and the plurality of support plates 13 may be spaced apart from each other, and each support plate 13 may support at least one battery cell group 11.

In this implementation, a plurality of support plates 13 may be provided, and the plurality of support plates 13 are all connected to the box 12 through a connection plate 14, so that the plurality of support plates 13 are insulated from the box 12, and the plurality of support plates 13 may be spaced apart from each other, so that the plurality of support plates 13 are relatively insulated from each other, each support plate 13 may support at least one battery cell group 11, and the battery cell groups 11 on various support plates 13 are also spaced apart from each other.

In the case of thermal runaway of the battery cell 111, the insulating layer at the bottom of the battery cell 111 is damaged, which may easily lead to the damage of the insulation design between the battery cell 111 and the support plate 13, causing conduction between the battery cell 111 and the support plate 13. In the case of thermal runaway of two battery cells 111 at the same time, the two battery cells 111 may be in conduction through the support plate 13, causing a short circuit or even a high-voltage breakdown of the battery 10, posing a safety hazard.

By providing a plurality of support plates 13, when thermal runaway occurs in the battery cells 111 on various support plates 13, the battery cells 111 on the various support plates 13 are not easily in conduction to form a short circuit due to the relative insulation between the various support plates 13, thereby reducing the probability of short circuit or even high-voltage breakdown of the battery 10 and improving the safety performance of the battery 10.

Specifically, the number of support plates 13 may be two, three, four or more than four, and the number of battery cell groups 11 on each support plate 13 may be one, two, three or four. The specific number is not limited herein and is determined according to the actual needs of the internal circuit design of the battery 10.

According to the embodiment of the present application, a plurality of support plates 13 are provided to reduce the probability of short circuit and high-voltage breakdown of the battery 10, thereby improving the safety performance of the battery 10.

According to some embodiments of the present application, a plurality of battery cell groups 11 may be provided, and the plurality of battery cell groups 11 may be provided in a one-to-one correspondence with the plurality of support plates 13.

In this implementation, a plurality of battery cell groups 11 may be provided in one-to-one correspondence with a plurality of support plates 13, that is, one battery cell group 11 is provided on each support plate 13, which facilitates the arrangement and assembly of the battery cell groups 11 and the support plates 13, and improves the arrangement density of the plurality of battery cells 111 on the support plates 13, allowing easy management.

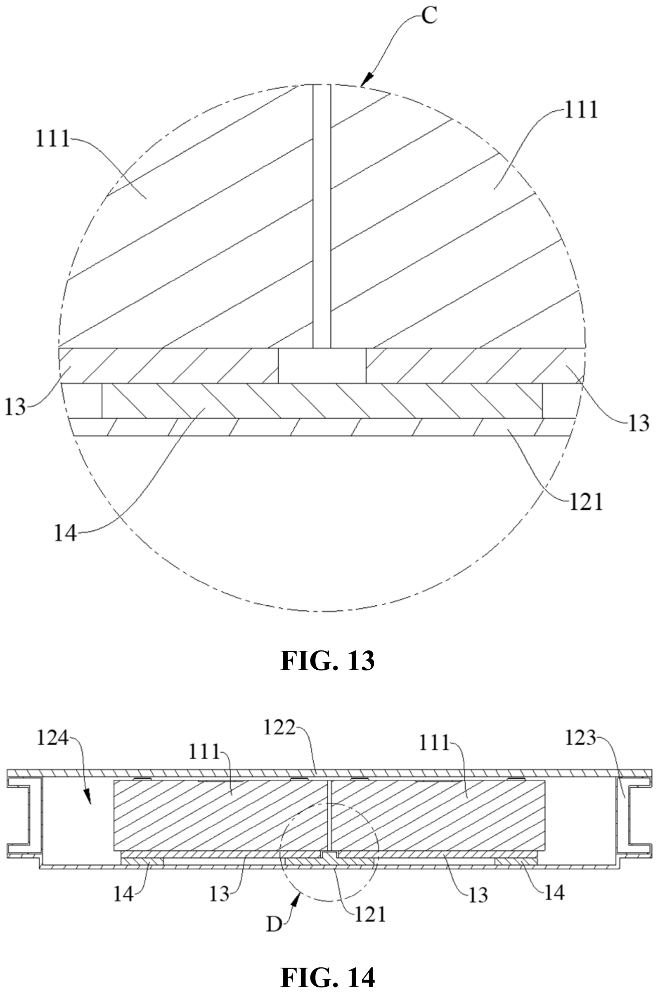

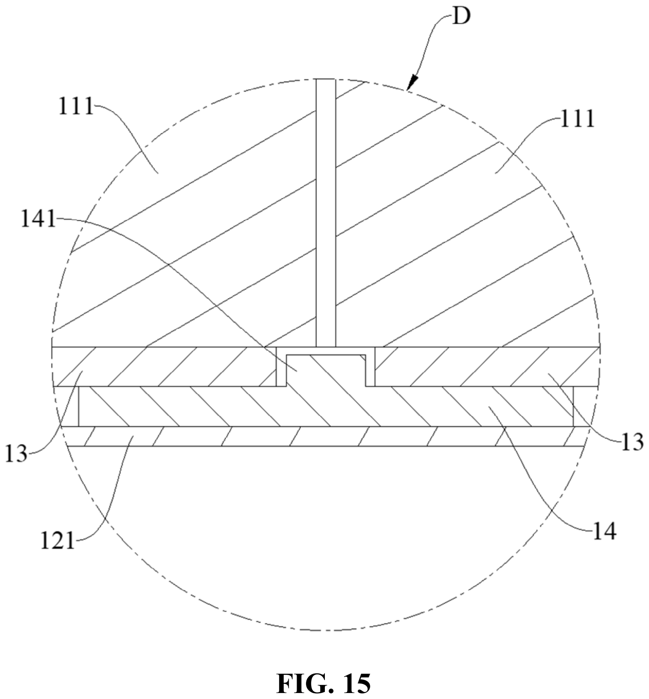

According to some embodiments of the present application, as shown in FIGS. 14 and 15, at least one connection plate 14 has a protrusion 141, and the protrusion 141 extends into the gap between two adjacent support plates 13.

In this implementation, at least one connection plate 14 may have a protrusion 141, and the protrusion 141 may extend into the gap between two adjacent support plates 13 to further isolate the two support plates 13, so that even if the battery 10 vibrates or shakes during use, the two support plates 13 will not come close to each other for conduction, thereby improving the stability of the insulation structure and the safety performance of the battery 10.

Specifically, a connection plate 14 may be provided on the sides of every two adjacent support plates 13 close to each other, and a protrusion 141 may be provided on the connection plate 14, so that the protrusion 141 is provided in the gap between every two adjacent support plates 13.

According to the embodiment of the present application, by providing a protrusion 141 on the connection plate 14, the insulation design between various support plates 13 is made more stable, thereby improving the safety performance of the battery 10.

According to some embodiments of the present application, the insulation resistance between two adjacent support plates 13 is R2, which may satisfy: $R2 \geq 1K\Omega$.

It can be understood that the greater the insulation resistance between various support plates 13, the lower the probability of short circuit and high-voltage breakdown, and the less the distance between two support plates 13, the less the resistance, and the greater the distance between two support plates 13, the greater the resistance. The distance between two adjacent support plates 13 is the shortest, and by defining the insulation resistance between two adjacent support plates 13, the insulation resistance between various support plates 13 can all meet the requirement.

Specifically, the minimum value of the insulation resistance R2 between two adjacent support plates 13 is $1K\Omega$, and R2 may be: $1K\Omega$, $2K\Omega$, $3K\Omega$, $5K\Omega$, $10K\Omega$, $100K\Omega$, $1M\Omega$ or other resistance values greater than or equal to $1K\Omega$, which is not limited herein.

According to the insulation resistance defined in the embodiment of the present application, by defining the minimum value of the insulation resistance R2 between two adjacent support plates 13, the insulation effect between various support plates 13 is ensured, thereby improving the safety of the battery 10.

According to some embodiments of the present application, in the same battery cell group 11 mounted on the same support plate 13, the potential difference between the cases of two adjacent battery cells 111 is Ui, satisfying: $Ui \leq 50V$.

When two battery cells 111 on the same support plate 13 experience thermal runaway at the same time, the probability of the two battery cells 111 being in conduction through the support plate 13 where they are located is very high, so the voltage difference between two adjacent battery cells 111 has a maximum value to reduce the probability of ignition.

The maximum value of the potential difference Ui between the cases of two battery cells 111 is limited to reduce the probability of ignition and improve the safety of the battery 10.

Specifically, the potential difference Ui between the cases of two adjacent battery cells 111 may be 50V, 45V, 40V, 30V, 20V, 10V or other values less than 50V, which is not specifically limited herein.

According to some embodiments of the present application, $Ui \leq 20V$.

In this implementation, by further defining the range of the potential difference Ui between the cases of two adjacent battery cells 111 in the same battery cell group 11 on the same support plate 13, the risk of ignition is further reduced.

Specifically, the potential difference Ui between the cases of two adjacent battery cells 111 may be 20V, 15V, 10V, 5V, 3.5V or other values less than 20V, which is not specifically limited herein.

According to some embodiments of the present application, the maximum value of the potential difference between the cases of two adjacent battery cells 111 in the same battery cell group 11 mounted on the same support plate 13 may be $U_{max}$, and the volumetric energy density of the battery cell 111 may be E, which may satisfy: $1.05*10^3 Wh*V/L \leq E * U_{max} \leq 4*10^4 Wh*V/L$.

In this implementation, the risk of ignition after thermal runaway of two adjacent battery cells 111 in the same battery cell group 11 can be determined based on the product of the maximum value $U_{max}$ of the potential difference between the cases of two adjacent battery cells 111 in the same battery cell group 11 and the volumetric energy density E of the battery cells 111. Refer to Table 1, which shows the performance after thermal runaway of two adjacent battery cells 111 when the battery cells 111 have different volumetric energy densities and different maximum values of the potential difference.

As can be seen from Table 1, in Comparative Examples 1-3, when $E*U_{max}$ is greater than $40000 Wh*V/L$, ignition occurs after thermal runaway of two adjacent battery cells 111 in the same battery cell group 11, which may easily cause safety hazards. In Example 9, when $E*U_{max}$ is equal to $40000 Wh*V/L$, slight short circuit and heating occur after two adjacent battery cells 111 in the same battery cell group 11 experience thermal runaway without causing ignition, which is the maximum critical point. Under the condition of $E * U_{max} \leq 4 * 10^4 Wh*V/L$, ignition will not occur, enabling relatively high safety.

At the same time, considering the usage power requirements and characteristics of the battery 10, the volumetric energy density and potential difference of the battery cell 111 cannot be too low. By defining the minimum value of $E*U_{max}$, the volume utilization of the battery cell 111 is guaranteed and the cost effectiveness of the battery 10 is improved.

Specifically, the value range of $E*U_{max}$ is $[1050 Wh*V/L, 40000 Wh*V/L]$. In some embodiments, $E*U_{max}$ may be $1050 Wh*V/L$, $3000 Wh*V/L$, $5000 Wh*V/L$, $6000 Wh*V/L$, $7500 Wh*V/L$, $8000 Wh*V/L$, $10000 Wh*V/L$, $16000 Wh*V/L$, $32000 Wh*V/L$, $40000 Wh*V/L$ or other values between $1050 Wh*V/L$ and $40000 Wh*V/L$.

Table 1

|  | E(Wh/L) | $U_{max}$(V) | $E*U_{max}$($Wh*V/L$) | Result |
|---|---|---|---|---|
| Example 1 | 300 | 3.5 | 1050 | Normal |
| Example 2 | 300 | 10 | 3000 | Normal |
| Example 3 | 300 | 20 | 6000 | Normal |
| Example 4 | 500 | 10 | 5000 | Normal |
| Example 5 | 500 | 15 | 7500 | Normal |
| Example 6 | 500 | 20 | 10000 | Normal |
| Example 7 | 800 | 10 | 8000 | Normal |
| Example 8 | 800 | 20 | 16000 | Normal |
| Example 9 | 800 | 50 | 40000 | Slight short circuit and heating |
| Comparative Example 1 | 800 | 60 | 48000 | Ignition |
| Comparative Example 2 | 800 | 80 | 64000 | Ignition |
| Comparative Example 3 | 800 | 100 | 80000 | Ignition |

According to the embodiment of the present application, the maximum and minimum values of $E*U_{max}$ are defined to reduce the probability of ignition during thermal runaway of the two battery cells 111, while ensuring high cost-effectiveness of the battery 10.

According to some embodiments of the present application, the maximum value of the potential difference between the cases of two adjacent battery cells 111 in the same battery cell group 11 may be $U_{max}$, and the volumetric energy density of the battery cell 111 may be E, which may satisfy: 300Wh/L $\leq$ E $\leq$ 800Wh/L and 3.5V $\leq$ Umax $\leq$ 50V.

It can be understood that if the voltage of the battery cell 111 is low, then for the same usage power, it is necessary in the battery 10 to connect more battery cells 111 in series to obtain the required current and voltage, which increases the proportion of mechanical members in the battery 10, reduces the volume utilization of the effective charging and discharging units, and reduces the cost effectiveness of the battery 10. If the voltage of the battery cell 111 is too high, however, ignition tends to take place.

According to the test data in Table 1, when 300Wh/L $\leq$ E $\leq$ 800Wh/L and 3.5V $\leq U_{max} \leq$ 50V, the battery 10 has high cost effectiveness and is not prone to ignition.

Specifically, the volumetric energy density E of the battery cell 111 has a value range of [300Wh/L, 800Wh/L]. In some embodiments, E may have a value of 300Wh/L, 400Wh/L, 500Wh/L, 600Wh/L, 700Wh/L, 800Wh/L or other values between 300Wh/L and 800Wh/L, which is not specifically limited herein.

Specifically, the maximum value $U_{max}$ of the potential difference between the cases of two adjacent battery cells 111 in the same battery cell group 11 is in the range of [3.5V, 50V]. In some embodiments, $U_{max}$ may be 3.5V, 10V, 15V, 20V, 50V or other values between 3.5V and 50V, which is not specifically limited herein.

According to the embodiments of the present application, by defining the maximum value $U_{max}$ of the potential difference between the cases of two adjacent battery cells 111 and the range of the volumetric energy density E of the battery cells 111, the battery cells 111 can have high cost-effectiveness and ignition is unlikely to be caused.

According to some embodiments of the present application, $1.05 * 10^3 Wh*V/L \leq E*U_{max} \leq 1.6*10^4 Wh*V/L$ and 3.5V $\leq U_{max} \leq$ 20V.

In this implementation, the value range of $E*U_{max}$ may be [1050 $Wh*V/L$, 16000 $Wh*V/L$]. Referring to Table 1, within this value range, the risk of slight short circuit and heating caused by thermal runaway of two adjacent battery cells 111 in the same battery cell group 11 is low, and the probability of causing ignition is lower, so the safety is higher. In some embodiments, $E*U_{max}$ may be 1050 $Wh*V/L$, 3000 $Wh*V/L$, 5000 $Wh*V/L$, 6000 $Wh*V/L$, 7500 $Wh*V/L$, 8000 $Wh*V/L$, 10000 $Wh*V/L$, 16000 $Wh*V/L$ or other values between 1050 $Wh*V/L$ and 16000 $Wh*V/L$.

In this implementation, the value range of $U_{max}$ may be [3.5V, 20V]. Within this value range, the risk of slight short circuit and heating caused by thermal runaway of two adjacent battery cells 111 in the same battery cell group 11 is low, and the probability of causing ignition is lower, allowing better safety. In some embodiments, $U_{max}$ may be 3.5V, 10V, 15V, 20V or other values between 3.5V and 20V, which is not specifically limited herein.

According to the embodiment of the present application, the ranges of $E*U_{max}$ and $U_{max}$ are further defined to further improve the safety of the battery 10.

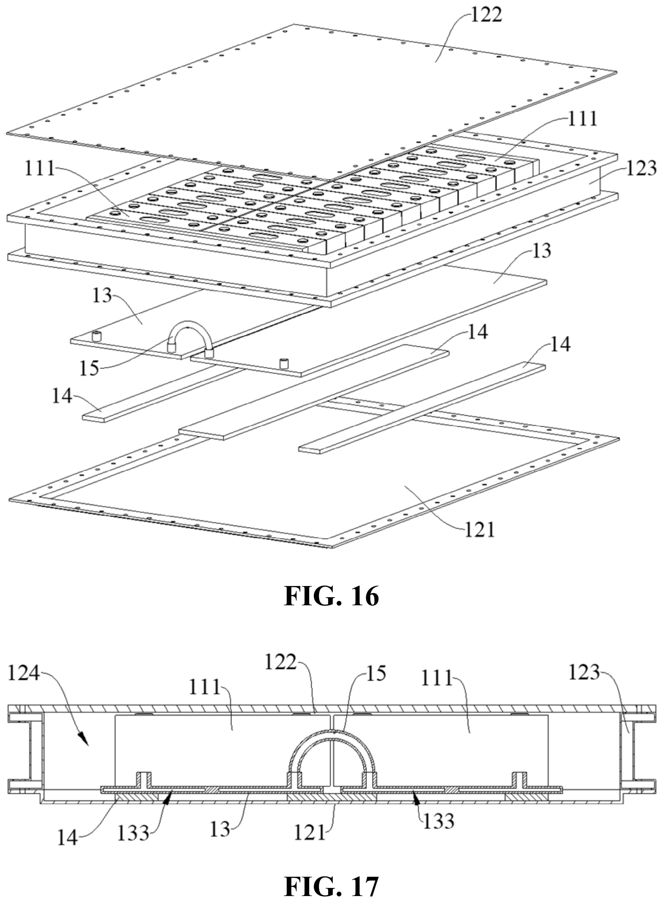

According to some embodiments of the present application, as shown in FIGS. 16 and 17, a flow channel 133 for flow of a heat exchange medium may be provided in the support plate 13, and the heat exchange medium is used to regulate the temperature of the battery cell 111. The flow channels 133 of a plurality of support plates 13 are communicated through a connection portion 15, and the connection portion 15 is an insulating member.

In this implementation, a flow channel 133 for the flow of a heat exchange medium may be provided in the support plate 13. The heat exchange medium may be cooling water or a refrigerant, etc. The temperature of the battery cell 111 is regulated by the heat exchange medium to heat up or cool down the battery cell 111, thereby improving the use efficiency and service life of the battery cell 111.

The flow channels 133 of the plurality of support plates 13 can be communicated through the connection portion 15 so that the heat exchange medium can flow in the plurality of support plates 13, thereby reducing the interface between the flow channels 133 of the various support plates 13 and the outside, which facilitates installation. The connection portion 15 is an insulating member, so that the two support plates 13 are insulated from each other.

In actual implementation, referring to FIGS. 16 and 17, taking the case where two support plates 13 are provided as an example, the two support plates 13 are respectively provided with an inlet and an outlet, and the inlet of the first one of the two support plates 13 is used to be connected with the outlet of an external heat exchanger to introduce the heat exchange medium into the battery 10, and the outlet of the first one of the two support plates 13 is communicated with the inlet of the second one through the connection portion 15, so that the heat exchange medium enters the second one of the two support plates 13 after circulating in the first one, and flows out through the outlet of the second one to circulate to the inlet of the heat exchanger, thereby completing one circulation of the heat exchange medium. The inlets and outlets of the two support plates 13 may be provided on the same side to reduce the space occupied by the pipe joint and the connection portion 15 and improve the space utilization inside the battery 10.

With the connection portion 15 provided according to the embodiment of the present application, the flow channels 133 of the various support plates 13 are communicated while ensuring the insulation design, which facilitates the thermal management design of the battery cell 111.

According to some embodiments of the present application, the maximum potential difference between the cases of the two adjacent battery cells 111 belonging respectively to two adjacent battery cell groups 11 mounted on two adjacent support plates 13 in the two adjacent battery cell groups 11 is U1, and the resistance of the heat exchange medium in the connection portion 15 is R3, which may satisfy:

$0.05V/K\Omega \le U1/R3 \le 400V/K\Omega$, where $R3 = \rho L/S$, $\rho$ is the conductivity of the heat exchange medium, L is the length of the heat exchange medium flowing in the connection portion 15, and S is the flow cross-sectional area of the connection portion 15.

It should be noted that, although the connection portion 15 is provided as an insulating member with a high insulation resistance, the heat exchange medium flowing in the connection portion 15 is generally made of a conductive material. After the flow channels 133 of two adjacent support plates 13 are communicated through the connection portion 15, if a battery cell 111 on each of the two adjacent support plates 13 experiences thermal runaway, the voltage between the two battery cells 111 may break through the heat exchange medium, causing ignition, or an electrolytic cell structure may be formed through the heat exchange medium to produce an electrolytic reaction, causing the connection position between the support plate 13 and the connection portion 15 to heat up, which may cause the connection portion 15 to soften or even cause leakage of the heat exchange medium, posing a safety hazard.

In this implementation, the maximum potential difference U1 between the cases of the two adjacent battery cells 111 belonging respectively to two adjacent battery cell groups 11 mounted on two adjacent support plates 13 in the two adjacent battery cell groups 11 is the maximum voltage that the heat exchange medium in the connection portion 15 can bear. If the potential difference is large, the probability of breakdown of the heat exchange medium is high. Similarly, if the resistance of the heat exchange medium in the connection portion 15 is low, the probability of breakdown through the heat exchange medium is high.

It can be understood that the resistance of the heat exchange medium depends on the conductivity of the heat exchange medium, the length of the connection portion 15 and the flow cross-sectional area of the connection portion 15.

In this implementation, the results of thermal runaway of two adjacent battery cells 111 belonging respectively to two adjacent battery cell groups 11 mounted on two adjacent support plates 13 in the two adjacent battery cell groups 11 under different U1/R3 conditions are tested to obtain a reasonable range of U1/R3. Refer to Table 2, which shows the performance after thermal runaway of two adjacent battery cells 111 belonging respectively to two adjacent battery cell groups 11 mounted on two adjacent support plates 13 in the two adjacent battery cell groups 11 under different U1/R3 conditions.

Table 2

| | U1(V) | R3(-KΩ) | U1/R3(V/-KΩ) | Result |
|---|---|---|---|---|
| Example 1 | 50 | 1000 | 0.05 | Normal |
| Example 2 | 50 | 100 | 0.5 | Normal |

(continued)

| | U1(V) | R3(-KΩ) | U1/R3(V/-KΩ) | Result |
|---|---|---|---|---|
| Example 3 | 50 | 1 | 50 | Normal |
| Example 4 | 200 | 1000 | 0.2 | Normal |
| Example 5 | 200 | 100 | 2 | Normal |
| Example 6 | 200 | 1 | 200 | Slight temperature rise at the connection portion |
| Example 7 | 400 | 1000 | 0.4 | Normal |
| Example 8 | 400 | 100 | 4 | Normal |
| Example 9 | 400 | 1 | 400 | Significant temperature rise at the connection portion |
| Comparative Example 1 | 400 | 0.8 | 500 | Ignition |
| Comparative Example 2 | 400 | 0.6 | 666.6667 | Ignition |
| Comparative Example 3 | 400 | 0.2 | 2000 | Ignition |

As can be seen from Table 2, in Comparative Examples 1-3, when U1/R3 is greater than 400V/KΩ, thermal runaway of two adjacent battery cells 111 belonging respectively to two adjacent battery cell groups 11 mounted on two adjacent support plates 13 in the two adjacent battery cell groups 11 causes ignition, which may easily cause safety hazards. In Example 9, when U1/R3 is equal to 400V/KΩ, the temperature of the connection portion 15 heats up significantly, without causing ignition, which is the maximum critical point. When U1/R3 ≤ 400V/KQ, no ignition is caused, allowing relatively high safety.

Moreover, considering the actual production and processing costs, U1/R3 has a minimum value, which is 0.05V/KΩ.

Specifically, the value range of U1/R3 is [0.05V/KΩ, 400V/KΩ]. In some embodiments, U1/R3 may have a value of 0.05V/KΩ, 0.2V/KΩ, 0.4V/KΩ, 0.5V/KQ, 2V/KΩ, 4V/KΩ, 50V/KΩ, 200V/KQ, 400V/KΩ or other values between 0.05V/KΩ and 400V/KQ, which is not specifically limited herein.

According to the embodiment of the present application, the range of U1/R3 is defined to ensure safety performance when the connection portion 15 is provided and have the production costs under control.

According to some embodiments of the present application, 50V ≤ U1 ≤ 400V and 1KΩ ≤ R3 ≤ 1000KΩ.

It can be understood that in designing and producing the battery 10, the actual usage power is generally used as the standard. When U1 is great, the battery 10 has high output power and wide application range. However, when the battery cell 111 experiences thermal runaway, high-voltage breakdown tends to occur. Therefore, when U1 is at a maximum value, R3 has a minimum value to reduce safety risks. When U1 is small, the safety is better but the cost effectiveness is lower. When U1 is at a minimum value, R3 has a maximum value, so that the conductivity of the connection portion 15 between adjacent support plates 13 and the heat exchange medium will not result in increased design cost due to excessively high resistance requirements, thereby reducing the design difficulty and reducing the risk of leakage caused by the connection portion 15 being too long or the difficulties in pipeline arrangement.

As can be seen from the Table 2 above, when U1 assumes a maximum value of 400V, R3 has a minimum value of 1KΩ, and when U1 assumes a minimum value of 50V, R3 has a maximum value of 1000KΩ.

Specifically, the value range of U1 is [50V, 400V]. In some embodiments, U1 may have a value of 50V, 100V, 150V, 200V, 250V, 300V, 400V or other values between 50V and 400V, which is not specifically limited herein.

Specifically, the value range of R3 is [1KΩ, 1000KΩ]. In some embodiments, R3 may have a value of 1KΩ, 10KΩ, 100KΩ, 300KΩ, 500KΩ, 800KΩ, 1000KΩ or other values between 1KΩ and 1000KΩ, which is not specifically limited herein.

According to the embodiment of the present application, the value ranges of U1 and R3 are defined to improve the safety performance of the battery 10 and have the production and design costs of the battery 10 under control.

According to some embodiments of the present application, 0.05V/KQ ≤ U1/R3 ≤ 200V/KΩ. In this implementation, the value range of U1/R3 may be [0.05V/KΩ, 200V/KΩ]. Referring to Table 2, in Example 6, when U1/R3 = 200V/KΩ, after two adjacent battery cells 111 belonging respectively to two adjacent battery cell groups 11 mounted on two adjacent support plates 13 in the two adjacent battery cell groups 11 experience thermal runaway, the connection portion 15 has a slight temperature rise. Therefore, when U1/R3 ≤ 200V/KΩ, better safety is allowed.

In some embodiments, U1/R3 may be 0.05V/KΩ, 0.2V/KΩ, 0.4V/KΩ, 0.5V/KΩ, 2V/KΩ, 4V/KΩ, 50V/KQ, 200V/KQ or other values between 0.05V/KQ and 200V/KΩ, which is not specifically limited herein.

According to the value range of U1/R3 in the embodiment of the present application, the battery 10 is safer.

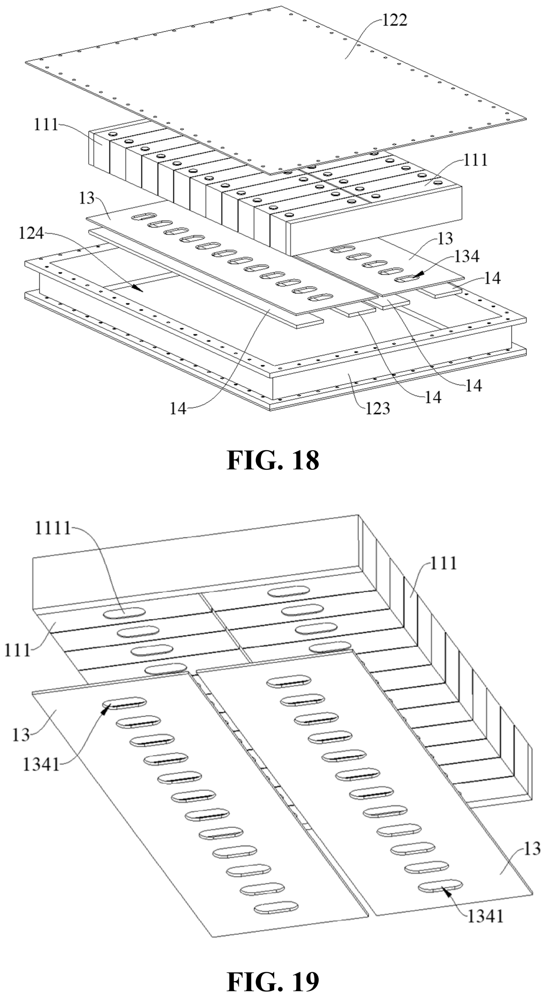

According to some embodiments of the present application, as shown in FIGS. 18 to 25, the side wall of the battery cell 111 provided with the pressure relief mechanism 1111 may be connected to the support plate 13, and the support plate 13 may have an avoidance structure 134 provided opposite to the pressure relief mechanism 1111.

The side wall of the battery cell 111 may be provided with the pressure relief mechanism 1111. The specific form of the pressure relief mechanism 1111 is not limited herein, and may be a common pressure relief mechanism 1111 on the market. In the event of thermal runaway of the battery cell 111, the pressure relief mechanism 1111 may actively open to discharge the exhaust to reduce the internal pressure of the battery cell 111, thereby preventing the case of the battery cell 111 from cracking and exploding, and improving the safety.

In this implementation, the side wall of the battery cell 111 provided with the pressure relief mechanism 1111 may be connected to the support plate 13. By providing an avoidance structure 134 provided opposite to the pressure relief mechanism 1111 on the support plate 13, avoidance can be provided for the pressure relief mechanism 1111. While the support plate 13 supports the battery cell group 11, the pressure relief mechanism 1111 can be opened smoothly, thereby improving the safety of the battery 10.

According to the embodiment of the present application, an avoidance structure 134 is provided on the support plate 13 to facilitate smooth opening of the pressure relief mechanism 1111, thereby improving the safety performance of the battery 10.

According to some embodiments of the present application, the avoidance structures 134 may be in one-to-one correspondence with the pressure relief mechanisms 1111; or alternatively, each avoidance structure 134 may correspond to a plurality of pressure relief mechanisms 1111.

In an example, as shown in FIGS. 18 and 19, a plurality of avoidance structures 134 may be provided on each support plate 13, and the number of avoidance structures 134 on each support plate 13 is the same as the number of battery cells 111 on the support plate 13, so that the avoidance structures 134 can be in one-to-one correspondence with the pressure relief mechanisms 1111, so as to provide avoidance for each pressure relief mechanism 1111, reduce the mutual influence between the pressure relief mechanisms 1111, and improve the stability.

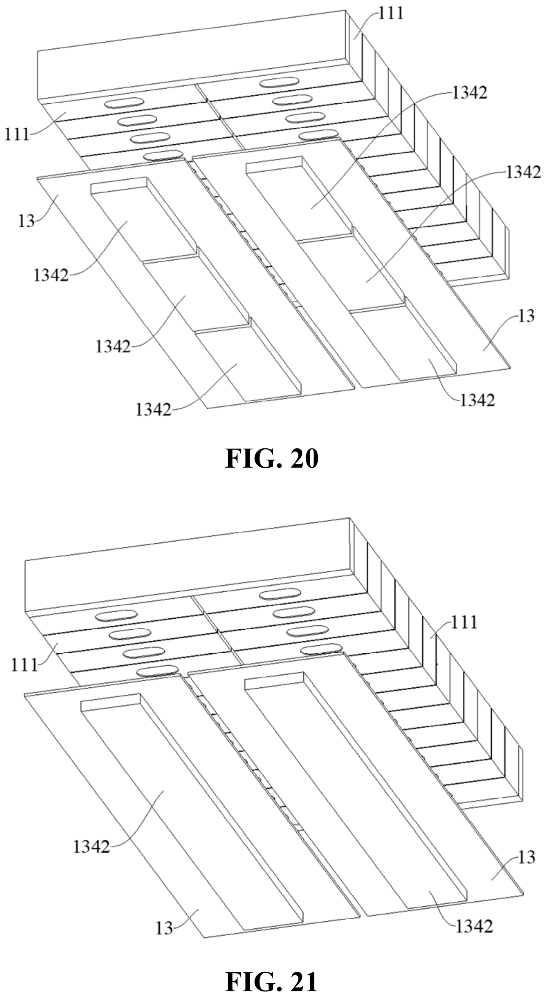

In another example, as shown in FIGS. 20 to 25, when the pressure relief mechanisms 1111 of the plurality of battery cells 111 are neatly arranged, one or more avoidance structures 134 may be provided on each support plate 13, so that each avoidance structure 134 may correspond to a plurality of pressure relief mechanisms 1111, and can provide avoidance for the plurality of pressure relief mechanisms 1111, and the support plate 13 can be easily processed.

According to some embodiments of the present application, as shown in FIGS. 18 and 19, the avoidance structure 134 may include a through hole 1341 provided in the support plate 13.

In this implementation, there may be a plurality of through holes 1341 on each support plate 13, and the plurality of through holes 1341 are provided in a one-to-one correspondence with the plurality of pressure relief mechanisms 1111, where the cross-sectional size of the through hole 1341 may be the same as the cross-sectional size of the pressure relief mechanism 1111, or the cross-sectional size of the through hole 1341 may be slightly larger than the cross-sectional size of the pressure relief mechanism 1111, so as to effectively avoid the action of the pressure relief mechanism 1111 and ensure the safety.

According to some embodiments of the present application, as shown in FIGS. 20 to 23, the avoidance structure may include an avoidance groove 1342 provided on the support plate 13, and the opening of the avoidance groove 1342 may face the pressure relief mechanism 1111.

In this implementation, the avoidance structure may include an avoidance groove 1342 provided in the support plate 13, and the opening of the avoidance groove 1342 faces the pressure relief mechanism 1111, so that the pressure relief mechanism 1111 can act toward the interior of the avoidance groove 1342 when it is opened, thereby providing avoidance for the pressure relief mechanism 1111. Specifically, the avoidance groove 1342 may extend along the arrangement direction of the battery cells 111, and one or more avoidance grooves 1342 may be provided along the arrangement direction of the battery cells 111, so that one avoidance groove 1342 may correspond to a plurality of pressure relief mechanisms 1111, allowing easy processing.

According to some embodiments of the present application, the depth of the avoidance groove 1342 is H, which may satisfy: $2mm \leq H \leq 10mm$; and/or, the bottom wall thickness of the avoidance groove 1342 is h, which may satisfy: $0.1mm \leq h \leq 2mm$.

When the pressure relief mechanism 1111 is opened, it needs some space for movement. By defining the minimum value of the depth H of the avoidance groove 1342, the pressure relief mechanism 1111 has enough space for movement. Moreover, in the event of thermal runaway of the battery cell 111, the pressure relief mechanism 1111 opens to discharge high-temperature and high-pressure gas to the outside. The high-temperature and high-pressure gas can break through the bottom wall of the avoidance groove 1342 to be discharged from the avoidance groove 1342. By defining the maximum value of the bottom wall thickness h of the avoidance groove 1342, the discharged gas can more easily break through the bottom wall of the avoidance groove 1342 and be smoothly discharged into the box 12.

It can be understood that, according to the processing technology and actual production requirements, if the depth H of the avoidance groove 1342 is too large, much space will be occupied and the space utilization rate is reduced;

similarly, if the thickness h of the bottom wall of the avoidance groove 1342 is too small, the processing technique is demanding and the production cost is increased.

In this implementation, the depth H of the avoidance groove 1342 has a value range of [2mm-10mm]. In some embodiments, the depth H of the avoidance groove 1342 may have a value of 2mm, 4mm, 6mm, 8mm, 10mm or other values between 2mm and 10mm, which is not limited herein; the thickness h of the bottom wall of the avoidance groove 1342 has a value range of [0.1mm-2mm]. In some embodiments, the thickness h of the bottom wall of the avoidance groove 1342 may have a value of 0.1mm, 0.4mm, 0.8mm, 1.2mm, 1.6mm, 2mm or other values between 0.1mm and 2mm, which is not limited herein.

According to the embodiment of the present application, the design parameters of the avoidance groove 1342 are defined to ensure that the pressure relief mechanism 1111 can work normally and the safety of the battery 10 is ensured.

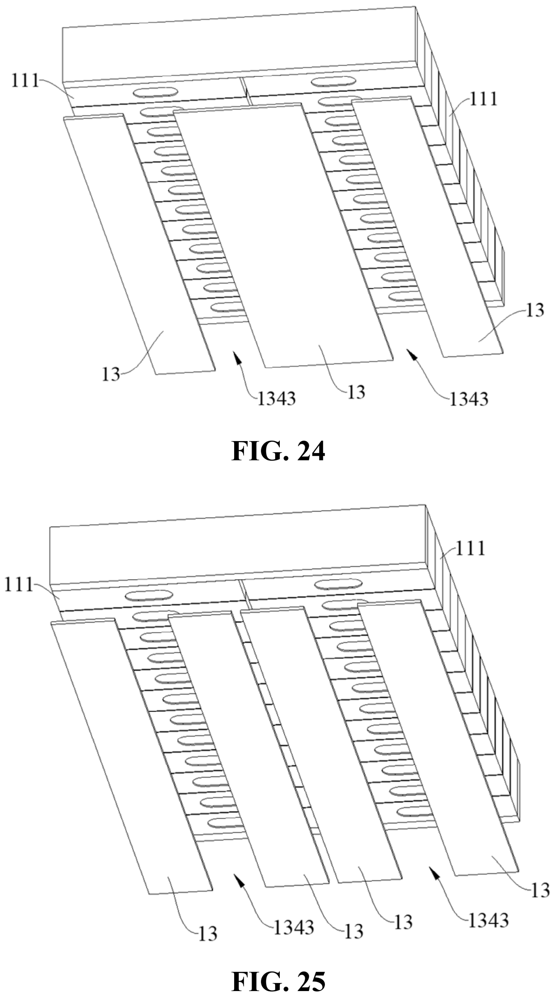

According to some embodiments of the present application, as shown in FIGS. 24 and 25, a plurality of support plates 13 may be provided, the plurality of support plates 13 may be spaced apart from each other, and the avoidance structure 134 may include an avoidance gap 1343 between two adjacent support plates 13.

In this implementation, a plurality of support plates 13 are provided and the support plates 13 are spaced apart from each other to form an avoidance gap 1343. The plurality of pressure relief mechanisms 1111 of each battery cell group 11 correspond to at least one avoidance gap 1343, so that the pressure relief mechanism 1111 can face the avoidance gap 1343 between two adjacent support plates 13. The avoidance structure 134 may include the avoidance gap 1343 between two adjacent support plates 13. The avoidance gap 1343 can be used to avoid the pressure relief mechanism 1111. The production and processing are simple, which is beneficial for reducing the production cost.

According to some embodiments of the present application, the present application further provides an electrical apparatus including the battery 10 of any one of the above solutions, and the battery 10 is configured to supply electric energy to the electrical apparatus.

The electrical apparatus may be any one of the aforementioned devices or systems in which the battery 10 is applied.

According to a first embodiment of the present application, and as shown in FIGS. 2 and 3, the present application provides a battery 10. The battery 10 includes a box 12, a battery cell group 11, and a support plate 13.

The box 12 includes a bottom plate 121, a top cover 122 and a frame 123. The frame 123 is a hollow structure with two ends open. The bottom plate 121 and the top cover 122 cover the open sides of the frame 123 respectively. The bottom plate 121, the top cover 122 and the frame 123 together define a cavity 124.

The battery cell group 11 is accommodated in the cavity 124. The battery cell group 11 includes a plurality of arranged battery cells 111. There may be a plurality of battery cell groups 11.

The support plate 13 is mounted in the cavity 124. A plurality of mounting holes 1321 are provided on the peripheral side of the support plate 13 and are spaced apart along its circumferential direction. The mounting holes 1321 run through the support plate 13 along the thickness direction of the support plate 13. The peripheral edge of the support plate 13 is clamped between the frame 123 and the bottom plate 121, and the support plate 13 is fixedly connected to the box 12 by fasteners passing through the mounting holes 1321. The support plate 13 is a plastic member, the battery cell group 11 is mounted on the support plate 13 and supports a plurality of battery cells 111 through the support plate 13, so that the plurality of battery cells 111 are relatively insulated from the box 12, and the insulation resistance R1 between the support plate 13 and the box 12 is $\geq$ 1M$\Omega$.

According to a second embodiment of the present application, and as shown in FIGS. 4 to 6, the present application provides a battery 10. The battery 10 includes a box 12, a battery cell group 11, and a support plate 13.

The design of the box 12 and the battery cell group 11 can be seen with reference to the first embodiment and will not be described in detail here.

This embodiment differs from the first embodiment in that in the second embodiment, the support plate 13 includes a first part 131 and a second part 132, the first part 131 is a metal member, and the second part 132 is a plastic member. The first part 131 includes a main plate body 1311 and a protruding portion 1312, the battery cell group 11 is supported on the main plate body 1311, the protruding portion 1312 is provided around the circumference of the main plate body 1311, and extends outward from the outer side wall of the main plate body 1311, the thickness of the protruding portion 1312 is less than the thickness of the main plate body 1311, and the protruding portion 1312 is centered in the thickness direction of the main plate body 1311, the second part 132 is provided around the main plate body 1311, and the second part 132 is provided with a groove on the inner side face of the main plate body 1311, the protruding portion 1312 can be inserted in the groove and mated and fixed thereto, the mounting hole 1321 is provided in the second part 132, so that the second part 132 is fixedly connected to the box 12, and the first part 131 is supported by the second part 132.

According to a third embodiment of the present application, and as shown in FIGS. 7 to 8, the present application provides a battery 10. The battery 10 includes a box 12, a battery cell group 11, and a support plate 13.

The design of the box 12 and the battery cell group 11 can be seen with reference to the first embodiment and part of the design of the support plate 13 can be seen with reference to the second embodiment, and will not be described in detail here.

This embodiment differs from the second embodiment in that the protruding portion 1312 extends outward from the outer side face of the main plate body 1311 to the edge of the box 12, and the second part 132 is wrapped over the protruding portion 1312, so that the mounting hole 1321 runs through the second part 132 and the protruding portion 1312 at the same time, and the protruding portion 1312 and the second part 132 are clamped between the frame 123 and the bottom plate 121 at the same time and connected by fasteners, so that the first part 131 is directly connected to the box 12 through the protruding portion 1312.

According to a fourth embodiment of the present application, and as shown in FIGS. 9 to 10, the present application provides a battery 10. The battery 10 includes a box 12, a battery cell group 11, and a support plate 13.

The design of the box 12 and the battery cell group 11 can be seen with reference to the first embodiment and will not be described in detail here.

This embodiment differs from the first embodiment in that the battery 10 further includes a connection plate 14, the support plate 13 is a metal member and is spaced apart from the box 12, the connection plate 14 is an insulating member, and the connection plate 14 is provided between the support plate 13 and the bottom plate 121 and is connected to the support plate 13 and the bottom plate 121 respectively, and the support plate 13 is insulated from the box 12 through the connection plate 14. There may be a plurality of connection plates 14, and the plurality of connection plates 14 may be spaced apart along the width direction of the box 12.

It should be noted that in the second, third and fourth embodiments, a flow channel 133 may be provided in the metal member in the embodiments, and a heat exchange medium may flow in the flow channel 133 to regulate the temperature of the battery cell 111 through the heat exchange medium.

According to a fifth embodiment of the present application, and as shown in FIGS. 11 to 13, the present application provides a battery 10. The battery 10 includes a box 12, a battery cell group 11, a support plate 13, and a connection plate 14.

The configuration of the box 12, the battery cell group 11, and the connection plate 14 can be seen with reference to the fourth embodiment and will not be described in detail here.

This embodiment differs from the fourth embodiment in that a plurality of support plates 13 are provided and the plurality of support plates 13 are spaced apart from each other, and a plurality of battery cell groups 11 are provided and the plurality of battery cell groups 11 are provided in one-to-one correspondence with the support plates 13. The insulation resistance R2 between two adjacent support plates 13 is $\geq$ 1K$\Omega$. In the same battery cell group 11 mounted on the same support plate 13, the potential difference $U_i$ between the cases of two adjacent battery cells 111 is $\leq$ 50V, and in some embodiments $U_i \leq$ 20V.

The maximum value of the potential difference between the cases of two adjacent battery cells 111 in the same battery cell group 11 mounted on the same support plate 13 is $U_{max}$, and the volumetric energy density of the battery cell 111 is E, which satisfies: $1.05*10^3 Wh*V/L \leq E*U_{max} \leq 3.2*10^4 Wh*V/L$, 300Wh/L $\leq$ E $\leq$ 800Wh/L and 3.5V $\leq U_{max} \leq$ 50V. In some embodiments, $1.05*10^3 Wh*V/L \leq E*U_{max} \leq 1.6*10^4 Wh*V/L$, and 3.5V $\leq U_{max} \leq$ 20V.

According to a sixth embodiment of the present application, and as shown in FIGS. 14 to 15, the present application provides a battery 10. The battery 10 includes a box 12, a battery cell group 11, a support plate 13, and a connection plate 14.

The configuration of the box 12, the battery cell group 11, and the support plate 13 can be seen with reference to the fifth embodiment and will not be described in detail here.

This embodiment differs from the fifth embodiment in that a protrusion 141 is provided on the side of the connection plate 14 facing the support plate 13, and the protrusion 141 extends into the gap between two adjacent support plates 13 to isolate the two adjacent support plates 13.

According to a seventh embodiment of the present application, and as shown in FIGS. 16 to 17, the present application provides a battery 10. The battery 10 includes a box 12, a battery cell group 11, a support plate 13, and a connection plate 14.

The configuration of the box 12, the battery cell group 11, and the connection plate 14 can be seen with reference to the fifth embodiment and will not be described in detail here.

This embodiment differs from the fifth embodiment in that the battery 10 further includes a connection portion 15, each support plate 13 is provided with a flow channel 133, a heat exchange medium flows in the flow channel 133, and the flow channels 133 of two adjacent support plates 13 are communicated through the connection portion 15, so that the heat exchange medium circulates in the flow channels 133 of the plurality of support plates 13. Specifically, each support plate 13 is provided with two interfaces, which are respectively used to be connected with the two ends of the flow channel 133 in the support plate 13, and the interfaces of two adjacent support plates 13 close to each other are communicated through the connection portion 15, and the two interfaces of each support plate 13 are provided on the same side of the length direction of the box 12.

Specifically, the maximum potential difference between the cases of the two adjacent battery cells 111 belonging respectively to two adjacent battery cell groups 11 mounted on two adjacent support plates 13 in the two adjacent battery cell groups 11 is U1, and the resistance of the heat exchange medium in the connection portion 15 is R3, satisfying:

$0.05V/K\Omega \leq U1/R3 \leq 400V/K\Omega$, $50V \leq U1 \leq 400V$, and $1K\Omega \leq R3 \leq 1000K\Omega$. In some embodiments, $0.05V/K\Omega \leq U1/R3 \leq 200V/K\Omega$.

According to an eighth embodiment of the present application, and as shown in FIGS. 18 to 19, the present application provides a battery 10. The battery 10 includes a box 12, a battery cell group 11, a support plate 13, and a connection plate 14.

The configuration of the box 12, the battery cell group 11, and the connection plate 14 can be seen with reference to the fifth embodiment and will not be described in detail here.

This embodiment differs from the fifth embodiment in that the side walls of the plurality of battery cells 111 in the battery cell group 11 connected to the support plate 13 are provided with a pressure relief mechanism 1111, and a plurality of through holes 1341 are provided in the support plate 13. The plurality of through holes 1341 are in one-to-one correspondence with the pressure relief mechanisms 1111 of the plurality of battery cells 111 on the support plate 13, and the cross-sectional size of the through hole 1341 is not less than the cross-sectional size of the corresponding pressure relief mechanism 1111.

According to a ninth embodiment of the present application, and as shown in FIGS. 20 to 23, the present application provides a battery 10. The battery 10 includes a box 12, a battery cell group 11, a support plate 13, and a connection plate 14.

The configuration of the box 12, the battery cell group 11, and the connection plate 14 can be seen with reference to the eighth embodiment and will not be described in detail here.

This embodiment differs from the eighth embodiment in that at least one avoidance groove 1342 is provided on the support plate 13, and one avoidance groove 1342 corresponds to the pressure relief mechanisms 1111 of a plurality of battery cells, where the depth H of the avoidance groove 1342 is $\geq 2$ mm, and the thickness h of the bottom wall of the avoidance groove 1342 is $\leq 2$ mm.

According to a tenth embodiment of the present application, and as shown in FIGS. 24 to 25, the present application provides a battery 10. The battery 10 includes a box 12, a battery cell group 11, a support plate 13, and a connection plate 14.

The configuration of the box 12, the battery cell group 11, and the connection plate 14 can be seen with reference to the fifth embodiment and will not be described in detail here.

This embodiment differs from the fifth embodiment in that the plurality of support plates 13 are spaced apart from each other to form avoidance gaps 1343, and the pressure relief mechanisms 1111 of the plurality of battery cells 111 of the battery cell group 11 correspond to the avoidance gaps 1343.

It should be noted that in the case of no conflict, the embodiments in the present application and the features in the embodiments may be combined with each other.

The above descriptions are merely preferred embodiments of the present application and are not intended to limit the present application. For those skilled in the art, the present application may have various modifications and changes. Any modification, equivalent replacement, improvement, etc. made within the spirit and principle of the present application shall fall within the scope of protection of the present application.

**Claims**

1. A battery, comprising:

   a box having a cavity;
   a battery cell group accommodated in the cavity and comprising a plurality of arranged battery cells; and
   a support plate mounted in the cavity, the battery cell group being mounted on the support plate so that the support plate supports the plurality of battery cells, and the support plate being insulated from the box.

2. The battery according to claim 1, wherein the insulation resistance between the support plate and the box is R1, satisfying: $R1 \geq 1M\Omega$.

3. The battery according to claim 1 or 2, wherein the support plate comprises a plastic member.

4. The battery according to claim 3, wherein the support plate is connected to the box.

5. The battery according to claim 4, wherein the support plate comprises a first part and a second part connected to each other, the battery cell group is mounted on the first part, the second part is connected with the box, the first part is a metal member, and the second part is a plastic member.

6. The battery according to claim 5, wherein one of the first part and the second part is provided with a protruding portion, and the other one is provided with a groove, and the protruding portion is inserted in the groove to connect the first part with the second part.

7. The battery according to claim 6, wherein the first part comprises a main plate body and the protruding portion protruding from an outer peripheral surface of the main plate body toward the second part, the battery cell group is mounted on the main plate body, the thickness of the protruding portion is less than the thickness of the main plate body, the second part is provided around the main plate body, and the second part has the groove on a side facing the first part.

8. The battery according to claim 7, wherein the support plate is provided with a mounting hole, and the mounting hole is configured to allow a fastener to pass through to connect the support plate and the box;

   the mounting hole runs through the second part along the thickness direction of the support plate;
   or,
   the mounting hole runs through the protruding portion and the second part along the thickness direction of the support plate.

9. The battery according to claim 1 or 2, wherein the support plate is a metal member, the support plate is spaced apart from the box, a connection plate is provided between the side of the support plate facing away from the battery cell group and the box, and the connection plate is an insulating member and is connected with the support plate and the box respectively.

10. The battery according to claim 9, wherein a plurality of support plates are provided, the plurality of support plates are spaced apart from each other, and each of the support plates supports at least one battery cell group.

11. The battery according to claim 10, wherein a plurality of battery cell groups are provided, and the plurality of battery cell groups are provided in one-to-one correspondence with the plurality of support plates.

12. The battery according to claim 10 or 11, wherein at least one of the connection plates has a protrusion, and the protrusion extends into a gap between two adjacent support plates.

13. The battery according to any one of claims 10 to 12, wherein the insulation resistance between the two adjacent support plates is R2, satisfying: R2 $\geq$ 1K$\Omega$.

14. The battery according to any one of claims 10 to 13, wherein the potential difference between the cases of two adjacent battery cells in the same battery cell group mounted on the same support plate is $U_i$, satisfying: $U_i \leq$ 50V.

15. The battery according to claim 14, wherein $U_i \leq$ 20V.

16. The battery according to any one of claims 10 to 15, wherein the maximum potential difference between the cases of two adjacent battery cells in the same battery cell group mounted on the same support plate is $U_{max}$, and the volumetric energy density of the battery cell is E, satisfying:

$$1.05*10^3 Wh*V/L \leq \mathrm{E}*U_{max} \leq 4*10^4 Wh*V/L$$.

17. The battery according to claim 16, wherein 300Wh/L $\leq$ E $\leq$ 800Wh/L and 3.5V $\leq$ $U_{max}$ $\leq$ 50V.

18. The battery according to claim 16 or 17, wherein

$$1.05*10^3 Wh*V/L \leq \mathrm{E}*U_{max} \leq 1.6*10^4 Wh*V/L$$, and 3.5V $\leq$ $U_{max}$ $\leq$ 20V.

19. The battery according to any one of claims 10 to 18, wherein a flow channel is provided in the support plate for flow of a heat exchange medium, the heat exchange medium is used to regulate the temperature of the battery cell, the flow channels of the plurality of support plates are communicated through a connection portion, and the connection portion is an insulating member.

20. The battery according to claim 19, wherein the maximum potential difference between the cases of the two adjacent battery cells belonging respectively to two adjacent battery cell groups mounted on two adjacent support plates in the two adjacent battery cell groups is U1, and the resistance of the heat exchange medium in the connection portion is R3, satisfying:

$0.05V/K\Omega \leq U1/R3 \leq 400V/K\Omega$, where $R3 = \rho L/S$, $\rho$ is the conductivity of the heat exchange medium, L is the length of the heat exchange medium flowing in the connection portion, and S is the flow cross-sectional area of the connection portion.

21. The battery according to claim 20, wherein $50V \leq U1 \leq 400V$ and $1K\Omega \leq R3 \leq 1000K\Omega$.

22. The battery according to claim 20 or 21, wherein $0.05V/K\Omega \leq U1/R3 \leq 200V/K\Omega$.

23. The battery according to any one of claims 1 to 22, wherein the side wall of the battery cell provided with a pressure relief mechanism is connected with the support plate, and the support plate has an avoidance structure provided opposite to the pressure relief mechanism.

24. The battery according to claim 23, wherein the avoidance structures are in one-to-one correspondence with the pressure relief mechanisms;
or, each of the avoidance structures corresponds to a plurality of pressure relief mechanisms.

25. The battery according to claim 23 or 24, wherein the avoidance structure comprises a through hole provided in the support plate.

26. The battery according to any one of claims 23 to 25, wherein the avoidance structure comprises an avoidance groove provided in the support plate, and an opening of the avoidance groove faces the pressure relief mechanism.

27. The battery according to claim 26, wherein the depth of the avoidance groove is H, satisfying: $2mm \leq H \leq 10mm$; and/or, the thickness of the bottom wall of the avoidance groove is h, satisfying: $0.1mm \leq h \leq 2mm$.

28. The battery according to any one of claims 23 to 27, wherein a plurality of support plates are provided, the plurality of support plates are spaced apart from each other, and the avoidance structure comprises an avoidance gap between two adjacent support plates.

29. An electrical apparatus, comprising:
a battery of any one of claims 1 to 28, the battery being configured to supply electric energy.

**FIG. 1**

**FIG. 2**

**FIG. 3**

**FIG. 4**

**FIG. 5**

**FIG. 6**

**FIG. 7**

FIG. 8

**FIG. 9**

**FIG. 10**

**FIG. 11**

**FIG. 12**

**FIG. 13**

**FIG. 14**

**FIG. 15**

**FIG. 16**

**FIG. 17**

**FIG. 18**

**FIG. 19**

111

1342

1342

111

13

1342

1342

1342

1342

1342

**FIG. 20**

111

111

13

1342

13

1342

**FIG. 21**

**FIG. 22**

**FIG. 23**

**FIG. 24**

**FIG. 25**

## INTERNATIONAL SEARCH REPORT

| International application No. |
| --- |
| **PCT/CN2024/073690** |

**A.  CLASSIFICATION OF SUBJECT MATTER**

H01M 50/244(2021.01)i;  H01M 50/209(2021.01)i;  H01M 50/593(2021.01)i;  H01M 10/613(2014.01)i;  H01M 10/6556(2014.01)i

According to International Patent Classification (IPC) or to both national classification and IPC

**B.  FIELDS SEARCHED**

Minimum documentation searched (classification system followed by classification symbols)

IPC:  H01M

Documentation searched other than minimum documentation to the extent that such documents are included in the fields searched

Electronic data base consulted during the international search (name of data base and, where practicable, search terms used)

CNABS, CNTXT, CNKI, WPABS, DWPI, USTXT, WOTXT, EPTXT: 宁德时代, 电池, 单体, 电芯, 底板, 箱底, 下盖, 下箱, 下壳, 绝缘, 支撑, 水冷, 液冷, 冷却, 板, batter+, cell, core, lower, bottom, cavity, case, support+, insulat+, cool+, plate, board

**C.  DOCUMENTS CONSIDERED TO BE RELEVANT**

| Category* | Citation of document, with indication, where appropriate, of the relevant passages | Relevant to claim No. |
| --- | --- | --- |
| PX | CN 117175122 A (NINGDE CONTEMPORARY AMPEREX TECHNOLOGY CO., LTD.) 05 December 2023 (2023-12-05) claims 1-29, description, paragraphs [0080]-[0253], and figures 1-25 | 1-29 |
| PX | CN 117154324 A (NINGDE CONTEMPORARY AMPEREX TECHNOLOGY CO., LTD.) 01 December 2023 (2023-12-01) description, paragraphs [0064]-[0188], and figures 1-16 | 1-29 |
| X | CN 115602965 A (CHINA FAW GROUP CORP., LTD.) 13 January 2023 (2023-01-13) description, paragraphs [0007]-[0074], and figures 1-6 | 1-19, 29 |
| Y | CN 115602965 A (CHINA FAW GROUP CORP., LTD.) 13 January 2023 (2023-01-13) description, paragraphs [0058]-[0074], and figures 1-6 | 23-28 |
| Y | CN 217562787 U (NINGDE CONTEMPORARY AMPEREX TECHNOLOGY CO., LTD.) 11 October 2022 (2022-10-11) description, paragraphs [0087]-[0206], and figures 2-19 | 23-28 |

☑ Further documents are listed in the continuation of Box C.  ☑ See patent family annex.

| | |
| --- | --- |
| *  Special categories of cited documents: | "T"  later document published after the international filing date or priority date and not in conflict with the application but cited to understand the principle or theory underlying the invention |
| "A"  document defining the general state of the art which is not considered to be of particular relevance | |
| "D"  document cited by the applicant in the international application | "X"  document of particular relevance; the claimed invention cannot be considered novel or cannot be considered to involve an inventive step when the document is taken alone |
| "E"  earlier application or patent but published on or after the international filing date | |
| "L"  document which may throw doubts on priority claim(s) or which is cited to establish the publication date of another citation or other special reason (as specified) | "Y"  document of particular relevance; the claimed invention cannot be considered to involve an inventive step when the document is combined with one or more other such documents, such combination being obvious to a person skilled in the art |
| "O"  document referring to an oral disclosure, use, exhibition or other means | |
| "P"  document published prior to the international filing date but later than the priority date claimed | "&"  document member of the same patent family |

| Date of the actual completion of the international search | Date of mailing of the international search report |
| --- | --- |
| **27 May 2024** | **03 June 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**EP 4 657 632 A1**

## INTERNATIONAL SEARCH REPORT

International application No.

**PCT/CN2024/073690**

### C.    DOCUMENTS CONSIDERED TO BE RELEVANT

| Category* | Citation of document, with indication, where appropriate, of the relevant passages | Relevant to claim No. |
|---|---|---|
| X | CN 217444525 U (SUNWODA ELECTRIC VEHICLE BATTERY CO., LTD.) 16 September 2022 (2022-09-16) description, paragraphs [0003]-[0045], and figures 1-5 | 1-19, 29 |
| Y | CN 217444525 U (SUNWODA ELECTRIC VEHICLE BATTERY CO., LTD.) 16 September 2022 (2022-09-16) description, paragraphs [0003]-[0045], and figures 1-5 | 23-28 |
| A | KR 20220064829 A (LG ENERGY SOLUTION LTD.) 19 May 2022 (2022-05-19) entire document | 1-29 |
| A | CN 219892373 U (SVOLT ENERGY TECHNOLOGY CO., LTD.) 24 October 2023 (2023-10-24) entire document | 1-29 |

Form PCT/ISA/210 (second sheet) (July 2022)

37

**INTERNATIONAL SEARCH REPORT**
**Information on patent family members**

International application No.

**PCT/CN2024/073690**

| Patent document cited in search report | | | Publication date (day/month/year) | Patent family member(s) | | | Publication date (day/month/year) |
|---|---|---|---|---|---|---|---|
| CN | 117175122 | A | 05 December 2023 | CN | 117175122 | B | 29 March 2024 |
| CN | 117154324 | A | 01 December 2023 | CN | 117154324 | B | 05 April 2024 |
| CN | 115602965 | A | 13 January 2023 | | None | | |
| CN | 217562787 | U | 11 October 2022 | WO | 2024007451 | A1 | 11 January 2024 |
| CN | 217444525 | U | 16 September 2022 | | None | | |
| KR | 20220064829 | A | 19 May 2022 | | None | | |
| CN | 219892373 | U | 24 October 2023 | | None | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311419402